**Europäisches Patentamt**

**European Patent Office**

**Office européen des brevets**

(19)

(11) Veröffentlichungsnummer : **0 019 909**
**B1**

(12) **EUROPÄISCHE PATENTSCHRIFT**

(45) Veröffentlichungstag der Patentschrift :
16.02.83

(21) Anmeldenummer : **80102964.6**

(22) Anmeldetag : **28.05.80**

(51) Int. Cl.³ : **H 02 G   1/10, E 02 F   5/10**

(54) **Verfahren und Vorrichtung zum Einbetten von Kabeln und dergleichen in einen Gewässergrund.**

(30) Priorität : **01.06.79 DE 2922410**

(43) Veröffentlichungstag der Anmeldung :
**10.12.80 Patentblatt 80/25**

(45) Bekanntmachung des Hinweises auf die Patenterteilung : **16.02.83 Patentblatt 83/07**

(84) Benannte Vertragsstaaten :
**BE FR GB IT NL SE**

(56) Entgegenhaltungen :
**DE A 1 484 692**
**DE C 629 544**
**DE C 698 495**
**FR A 2 179 070**
**FR A 2 271 346**
**FR A 2 388 094**
**GB A 1 286 521**
**US A 3 004 392**
**US A 3 434 297**
**US A 3 462 963**
**US A 3 590 589**
**US A 3 732 700**

(73) Patentinhaber : **HYDRO-JET-SYSTEM Establishment**

**Vaduz (LI)**

(72) Erfinder : **Harmstorf, Rudolf**
**Neue Grosse Bergstrasse 6**
**D-2000 Hamburg 50 (DE)·**

(74) Vertreter : **Hauck, Hans, Dipl.-Ing. et al**
**Patentanwälte Dipl.-Ing. H. Hauck,**
**Dipl.-Phys. W. Schmitz, Dipl.-Ing. E. Graalfs,**
**Dipl.-Ing. W. Wehnert, Dipl.-Phys. W. Carstens**
**Dr.-Ing. W. Döring Neuer Wall 41**
**D-2000 Hamburg 36 (DE)**

## Verfahren und Vorrichtung zum Einbetten von Kabeln und dergleichen in einen Gewässergrund

Die Erfindung betrifft zunächst ein Verfahren zum Einbetten eines Kabels oder dergleichen in einen Gewässergrund, bei dem das Kabel in eine in dem Gewässergrund fortschreitend durch Spülen hergestellte Zone verminderter Dichte eingeführt wird und beim Antreffen von Bodenformationen, die durch das Spülen nur unzureichend aufgelockert werden, der Gewässergrund mechanisch aufgelockert wird, wobei das mechanische Auflockern in einem Bereich erfolgt, der in der Einbettungsrichtung vor dem Zentrum des Spülbereichs liegt.

Ferner betrifft die Erfindung eine zur Durchführung des Verfahrens geeignete Vorrichtung zum Einbetten von Kabeln und dergleichen in einen Gewässergrund, mit einem auf dem Gewässergrund bewegbaren, insbesondere fahrbaren, Einbettungsfahrzeug, das eine mit dem einzubettenden Kabel in Führungsbeziehung stehende Leiteinrichtung und eine Spüleinrichtung aufweist, die auf verschiedene Spültiefen unterhalb des Fahrzeugs einstellbar ist und vorzugsweise zu diesem Zweck um eine Querachse des Einbettungsfahrzeuges schwenkbar ist, wobei ferner das Einbettungsfahrzeug zusätzlich mit einer mechanisch wirkenden Boden-Auflockerungseinrichtung versehen ist, die ein Auflockerungswerkzeug aufweist und wahlweise in Wirksamkeit setzbar, vorzugsweise im Spülbereich der Spüleinrichtung, insbesondere in der Einbettungsrichtung vor der Spüleinrichtung, angeordnet und vorzugsweise mit wenigstens einer Werkzeug-Spüldüse versehen ist. Das Verfahren und die Vorrichtung der eingangs beschriebenen Art sind aus der US-A-3 590 589 bekannt ; dabei ist freilich anzumerken, daß nach dieser bekannten Lehre die Spüleinrichtung als Saugeinrichtung ausgebildet ist, wogegen im Rahmen der vorliegenden Erfindung in erster Linie an ein Spülen durch Ausspritzen von Spülwasser gedacht ist.

Eine ähnliche bekannte Lehre ist in der DE-C-629 544 dargestellt ; dort sind allerdings die Spüleinrichtung und die mechanische Boden-Auflockerungseinrichtung fest miteinander verbunden.

Auf die eingangs beschriebene Weise kann man die Vorteile der Einspültechnik auch dann weitgehend erhalten, wenn in der Verlegetrasse stellenweise nicht spülbare Bodenformationen vorkommen. Es ist dann nicht erforderlich, vor Beginn des Verlegevorganges diese Bereiche in einer aufwendigen Sonderarbeit zu ermitteln und so weit mechanisch aufzulockern, daß sie spülbar werden ; statt dessen wird das Auflockern bedarfsweise erst dann vorgenommen, wenn man beim Einspülen auf festere Bodenformationen trifft. Auch bei dieser Technik bleibt jedoch das Antreffen einer nicht spülbaren Bodenformation eine unangenehme Störung, die es erforderlich macht, den Spülvorgang zu unterbrechen und durch Versuche festzustellen, über welche Strecke ein mechanisches Auflockern erforderlich ist. Dadurch wird der Hauptvorteil des Einspülens, nämlich die verhältnismäßig hohe Einbettungsgeschwindigkeit, empfindlich beeinträchtigt.

Die Erfindung geht von der Aufgabe aus, diese Nachteile zu überwinden und demgemäß ein Verfahren und eine Vorrichtung zu schaffen, mit denen das Einbetten auch beim Vorliegen stellenweise nicht spülbarer Bodenformationen zügig weitergeführt werden kann.

Nach der Erfindung wird diese Aufgabe hinsichtlich des Verfahrens gelöst mit einem Verfahren der eingangs angegebenen Art, das dadurch gekennzeichnet ist, daß das mechanische Auflockern während der Durchführung des Einbettungsvorganges selbsttätig in Abhängigkeit von der erzielten Spültiefe gesteuert wird, derart, daß das mechanische Auflockern eingeleitet wird, wenn die bei dem Spülen allein erzielte Spültiefe einen vorbestimmten Mindestwert unterschreitet, daß das mechanische Auflockern bis zu einer Arbeitstiefe erfolgt, die größer ist als der Mindestwert, aber kleiner ist als der Höchstwert der bei weichem Boden maximal erreichbaren Spültiefe, und daß das mechanische Auflockern beendet wird, wenn die Spültiefe eine vorbestimmte Zeitspanne lang die Arbeitstiefe des mechanischen Auflockerns überschritten hat.

Bei dem erfindungsgemäßen Verfahren werden der Umfang und die Zeitdauer des mechanischen Auflockerns selbsttätig auf das gerade erforderliche Ausmaß begrenzt, und das Einleiten und Beenden des Auflockerns bedarf keiner besonderen Maßnahme oder zeitraubender Versuche, sondern erfolgt selbsttätig in Abhängigkeit von der Spültiefe. Ohne besonderes Zutun läuft der Einbettungsvorgang stets mit der höchstmöglichen Geschwindigkeit ab ; dabei kann der Erfolg eines mechanischen Auflockerns insbesondere an dem Einsetzen einer rascheren Weiterbewegung des (üblicherweise unter Zugkraft stehenden) Einbettungsfahrzeuges erkannt werden.

Bei dem erfindungsgemäßen Verfahren wird als Kriterium dafür, ob das mechanische Auflockern zusätzlich erforderlich ist, einfach die beim Spülen allein erzielbare Spültiefe verwendet. Die Spültiefe kann leicht meßtechnisch erfaßt und in Form eines Einschaltsignals für das Einleiten des mechanischen Auflockerns wiedergegeben werden.

Bei dem erfindungsgemäßen Verfahren kann durch eine entsprechend große Bemessung der erwähnten Zeitspanne dafür gesorgt werden, daß ein vorzeitiges Beenden des mechanischen Auflockerns verhindert wird, insbesondere in den Übergangszonen zwischen härteren Bodenformationen, die ein mechanisches Auflockern erfordern, und weicheren, spülbaren Bodenformationen, — derartige Übergänge enthalten oft noch lokale Anhäufungen härterer Bodenteile, so daß ohne die erwähnte Verzögerungszeit der mechanische Auflockerungsvorgang unnötig oft ein- und ausgeschaltet werden würde.

In weiterer Ausgestaltung der Erfindung kann das erfindungsgemäße Verfahren in einer noch größeren Zahl von Anwendungsfällen mit Erfolg eingesetzt werden, wenn zwei Intensitätsstufen des mechanischen Auflockerns wählbar sind, wobei die Stufe der höheren Intensität verwendet wird, wenn im Betrieb der Stufe der niedrigeren Intensität die für das Fortschreiten des Einbettungsvorganges aufzuwendende Zugkraft einen vorbestimmten Schaltwert überschreitet. Bei dieser Ausführungsart können Art, Leistungsaufwand und Zeitbedarf des mechanischen Auflockerns noch besser an die verschiedenen möglichen Bodenformationen angepaßt werden ; so kann mit der zunächst verwendeten Stufe der niedrigeren Intensität normalerweise noch eine verhältnismäßig hohe Einbettungsgeschwindigkeit erzielt werden, wogegen bei alleinigem Vorhandensein von mechanischen Auflockerungswerkzeugen hoher Intensität, wie sie für besonders feste Bodenformationen erforderlich sind, nur eine für diese Werkzeuge typische niedrigere Einbettungsgeschwindigkeit möglich wäre.

Als Kriterium dafür, ob ein Übergang von der höheren zur niedrigeren Intensitätsstufe möglich ist, kann in sehr einfacher Weise die Eindringtiefe dienen, die bei dem Auflockern mit hoher Intensität erzielt wird. Eine dementsprechende besonders vorteilhafte Ausgestaltung der Erfindung ist dadurch gekennzeichnet, daß das Auflockern mit der höheren Intensitätsstufe mit einer von dem erzielten Auflockerungsgrad abhängigen Eindringtiefe erfolgt und beendet wird, wenn die Eindringtiefe eine vorbestimmte Zeitspanne lang einen vorbestimmten Schaltwert überschritten hat. Die Verzögerungs-Zeitspanne hat wieder den Zweck, ein zu häufiges Wechseln von hoher zu niedriger Auflockerungsintensität zu verhindern.

Zur Lösung der erfindungsgemäßen Aufgabe eignet sich nach der Erfindung besonders eine Vorrichtung der eingangs angegebenen Art, die dadurch gekennzeichnet ist, daß die Spüleinrichtung ein Spülschwert aufweist, das mit einer vorgegebenen Vorspannung nach unten beaufschlagbar und gegen diese Vorspannung nach oben drückbar ist, und daß die Arbeitsweise der Einbettungsvorrichtung in Abhängigkeit von der Spültiefe des unter der Vorspannung stehenden Spülschwerts derart selbsttätig steuerbar ist, daß einer Verminderung der Schwert-Spültiefe unter einen vorgegebenen Mindestwert entgegengewirkt wird.

Man erkennt ohne weiteres, daß dem Fachmann zahlreiche Möglichkeiten für die Steuerung der Arbeitsweise in Abhängigkeit von der Spültiefe des Spülschwerts zur Verfügung stehen. Entscheidend ist, daß die Spültiefe in Form der Ausfahrtiefe des Spülschwerts eine sehr einfach zu messende Größe darstellt, so daß es nur eines geringen apparativen Aufwandes bedarf, um ein Signal zu gewinnen, das ein Unterschreiten der Mindest-Spültiefe des Schwerts anzeigt und/oder Gegenmaßnahmen selbsttätig veranlaßt, die dem Unterschreiten des Mindestwerts der Spültiefe entgegenwirken, beispielsweise dadurch, daß die Boden-Auflockerungseinrichtung selbsttätig in Wirksamkeit gesetzt wird und/oder die Fahrgeschwindigkeit des Einbettungsfahrzeuges vermindert wird, so daß das Spülschwert eine größere Einwirkungszeit pro Längeneinheit des Einbettungsweges zur Verfügung hat.

In weiterer Ausgestaltung der Erfindung ist es zweckmäßig, wenn die Schwert-Vorspannung mit zunehmender Schwert-Spültiefe zunimmt. Es ergibt sich dann eine klare Zuordnung zwischen Schwert-Spültiefe und Boden-Festigkeit. Diese erwünschte Charakteristik der Schwert-Vorspannung kann auf verschiedene einfache Weisen erzielt werden. Einen besonders einfachen Aufbau erhält man, wenn ein ohnehin zum Heben und Senken des Spülschwerts vorgesehener Hydraulikzylinder zur Erzeugung der Vorspannungscharakteristik dadurch herangezogen wird, daß zur Speisung des Hydraulikzylinders eine Drucksteuereinrichtung vorgesehen ist, die im Spülbetrieb eine gewünschte Abhängigkeit der Vorspannung von der Ausfahrtiefe des Schwerts einstellt.

Eine andere besonders einfache Möglichkeit zur Erzielung der gewünschten Vorspannungs-Charakteristik ergibt sich, wenn das Spülschwert zwecks Erzeugung der Heb- und Senkbarkeit um eine Querachse des Einbettungsfahrzeuges schwenkbar gelagert ist ; dann kann man nämlich einfach die Gewichtsverteilung des Spülschwerts so auslegen, daß die gewünschte Abhängigkeit zwischen der Schwert-Ausfahrtiefe und der nach unten gerichteten Vorspannungskraft erhalten wird.

Schließlich kann die gewünschte Vorspannungscharakteristik, d. h. eine mit steigender Spültiefe zunehmende Vorspannung des Spülschwerts nach unten, auch sehr einfach dadurch erzielt werden, daß das Spülschwert über wenigstens eine Feder an dem Einbettungsfahrzeug abgestützt ist. Diese Maßnahme kann auch zusätzlich zu anderen Maßnahmen zur Erzeugung der gewünschten Vorspannungscharakteristik angewandt werden.

Wie schon weiter oben beschrieben wurde, ergibt sich bei Spültiefen, die größer sind als der Mindestwert, eine automatische Anpassung der Spültiefe an die Bodenbeschaffenheit, ohne daß besondere zusätzliche Maßnahmen erforderlich sind ; es ist deshalb zweckmäßig, wenn in diesem Bereich von Schwert-Spültiefen die Arbeitsweise der Einbettungsvorrichtung unabhängig von der Schwert-Spültiefe steuerbar ist.

Die Erfindung wird im folgenden anhand von Ausführungsbeispielen in Verbindung mit den Zeichnungen näher beschrieben. Es zeigt :

Figur 1 eine schematische Erläuterung, nach Art einer Vertikal-Schnittansicht, einer erfindungsgemäßen Einbettungsvorrichtung,

Figur 2 eine der Fig. 1 ähnliche Darstellung, jedoch in einem anderen Betriebszustand der Einbettungsvorrichtung,

Figur 3 in ähnlicher Darstellung wie in den Figuren 1 und 2 eine andere Ausführungsform eines Einbettungsfahrzeuges einer erfindungsgemäßen Einbettungsvorrichtung, und

Figur 4 in ähnlicher Darstellung wie in den Figuren 1 bis 3 eine schematische Teildarstellung einer anderen Ausführungsform.

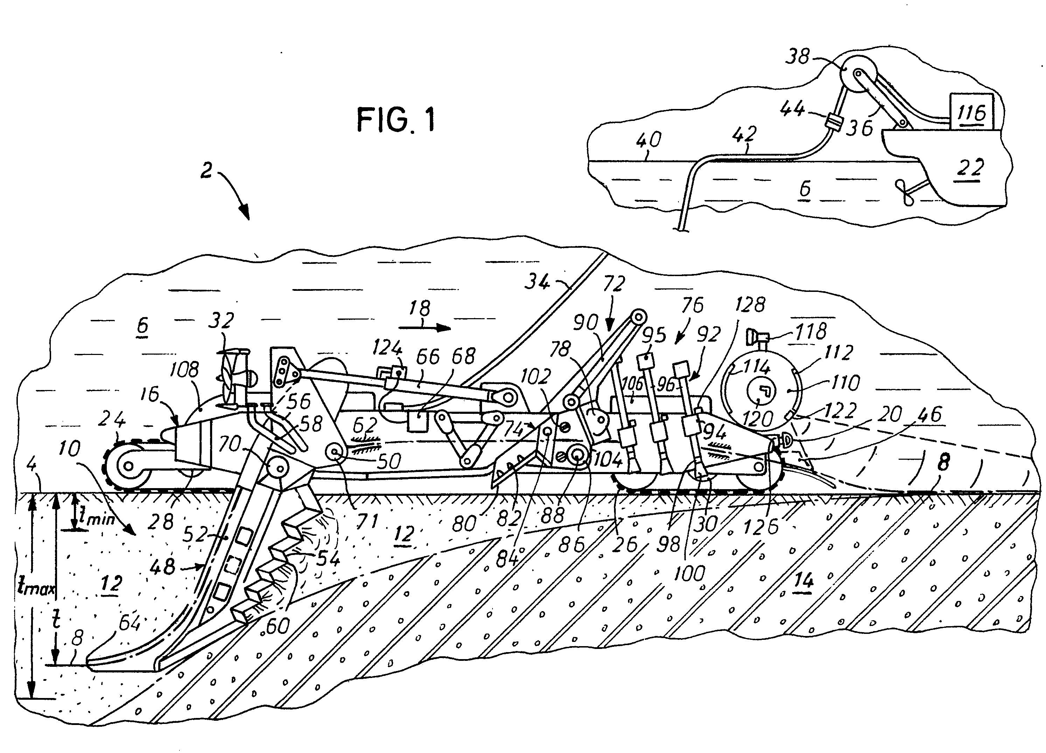

Fig. 1 erläutert in ganz schematischer Darstellung eine Vorrichtung 2 zum Einbetten eines auf dem Gewässerboden 4 eines Gewässers 6 ausgelegten Kabels 8 in den Gewässergrund 10. Es ist hier angenommen, daß es sich um einen Ozeangrund mit Zonen verschiedener Beschaffenheit handelt. In der Fig. 1 geht der Gewässergrund 10 von links nach rechts von einer verhältnismäßig lockeren und gut spülbaren Sandschicht 12 in eine festere und normalerweise nicht ohne weiteres spülbare Geschiebemergel-Schicht 14 über.

Die Vorrichtung 2 weist ein Einbettungsfahrzeug 16 auf, das auf dem Gewässerboden 4 in der Einbettungsrichtung 18 bewegbar ist. Das Einbettungsfahrzeug kann beispielsweise mittels eines (nicht dargestellten) Zugseils, das an einer Öse 20 am vorderen Ende des Einbettungsfahrzeugs befestigt ist, von einem zugeordneten Begleitschiff 22 gezogen werden. In den meisten Fällen ist es aber vorteilhafter, wenn das Einbettungsfahrzeug einen steuerbaren und vorzugsweise auch richtungsumkehrbaren Eigenantrieb hat, weil dann das Einbettungsfahrzeug 16 genauer gelenkt und an dem vorher auf dem Gewässerboden 4 ausgelegten Kabel 8 entlanggefahren werden kann. Die Richtungsumkehrbarkeit des Eigenantriebs ist vorteilhaft, damit besonders feste und schwer aufzulockernde Bodenbereiche nötigenfalls mehrmals durchfahren werden können, bis die gewünschte Einbettungstiefe erreicht ist. Bei den dargestellten Ausführungsbeispielen hat das Einbettungsfahrzeug 16 sowohl ein Boden-Fahrwerk mit mehreren Raupen-Fahrwerken 24 bzw. 26, die am vorderen bzw. am hinteren Ende des Fahrzeuges vorgesehen und durch Hydraulikmotoren 28 bzw. 30 antreibbar sind, als auch einen Strömungsantrieb in Form eines Propellers 32, der gleichfalls von einem Hydraulikmotor antreibbar ist. Die Raupen-Fahrwerke bieten den bekannten Vorteil der Geländegängigkeit. Der zusätzliche Strömungsantrieb vermag auch dann Schub zu erzeugen, wenn die Raupen-Fahrwerke auf einem Gewässerboden 4 nur wenig Kraftschluß finden.

Die Versorgung des Einbettungsfahrzeuges mit Energie, Luft, Kommunikationsverbindungen, Steuersignalen und dergleichen erfolgt über ein Leitungsbündel 34, das zu dem Begleitschiff 22 führt, und zwar vorzugsweise über einen in Fig. 1 nur schematisch angedeuteten Kran-Ausleger 36 mit Dämpfungseinrichtung 38. Das Leitungsbündel 34 ist so konstruiert, das es einen geringen Auftrieb hat, so daß es niemals vor das Einbettungsfahrzeug 16 fallen kann und immer etwa senkrecht über dem Einbettungsfahrzeug 16 an die Oberfläche 40 des Gewässers 6 steigt und von dort über einen an der Oberfläche schwimmenden Abschnitt 42 zum Heck des Begleitschiffs 22 verläuft. Durch diese Dreiecksverbindung des Leitungsbündels 34 mit dem Begleitschiff 22 ist sichergestellt, daß normalerweise eine übermäßige Zugbeanspruchung des Leitungsbündels 34 nicht vorkommen kann; denn es müßte dazu erst der auf dem Wasser schwimmende Abschnitt 42 in eine mit den restlichen Abschnitten ausgerichtete Lage gestreckt werden. Eine weitere Sicherung gegen übermäßige Zugbeanspruchungen des Leitungsbündels 34 ist durch die Dämpfungseinrichtung 38 gegeben.

Das Begleitschiff 22 wird während der Einbettungsarbeiten durch eine automatische Positioniereinrichtung (nicht dargestellt) etwa eine Schiffslänge vor dem Einbettungsfahrzeug 16 genau über dem auf dem Gewässerboden 4 ausgelegten Kabel 8 gehalten.

Wenn das Einbettungsfahrzeug 16 mit Eigenantrieb versehen ist, können die Einbettungsarbeiten normalerweise auch bei schlechtem Wetter fortgeführt werden, weil die Bewegungen des Begleitschiffs 22 auf die Fortbewegung des Einbettungsfahrzeugs 16 keinen Einfluß haben. Bei Wetterlagen, die ein Arbeiten überhaupt nicht mehr zulassen, kann das von dem Begleitschiff zu dem Einbettungsfahrzeug verlaufende Leitungsbündel 34 mit Hilfe einer Schnellkupplung 44 rasch getrennt werden. Die Schnellkupplung 44 besitzt einen Schnellverschlußdeckel, der ein Eindringen von Wasser in die Enden des Leitungsbündels verhindert, so daß der zu dem Einbettungsfahrzeug 16 führende Abschnitt einfach über Bord geworfen werden kann, nachdem das Kabelende mittels einer Boje erkennbar gemacht worden ist. Es kann dann das Begleitschiff 22 einen Schutzhafen aufsuchen, während das Einbettungsfahrzeug 16 und das Leitungsbündel 34 ungefährdet auf dem Gewässerboden 4 verbleiben können. Das Wiederauffinden des an der Boje (nicht dargestellt) befestigten Kabelendes kann in bekannter Weise dadurch erleichtert werden, daß in der Boje ein anpeilbarer Sender vorgesehen wird.

Das Einbettungsfahrzeug hat an seinem vorderen Ende eine mit dem einzubettenden Kabel 8 in Führungsbeziehung stehende Leiteinrichtung 46, die im einfachsten Fall aus einem Einlauftrichter mit zwei links und rechts vom Kabel-Einlaufweg vorgesehenen Fühlern besteht. Das Einbettungsfahrzeug 16 hat eine von der Leiteinrichtung 46 des Kabels 8 gesteuerte Lenkeinrichtung, die hier nicht im einzelnen beschrieben wird. Das vordere Raupenfahrwerk 26 ist auf einem Drehgestell um eine Vertikalachse drehbar gelagert und von einem (nicht dargestellten) Lenkmotor in verschiedene Positionen bezüglich der Vertikalachse einstellbar. Der Lenkmotor wird von den Fühlern der Leiteinrichtung 46 so gesteuert, daß das Einbettungsfahrzeug 16 an dem vorher ausgelegten Kabel 8 entlanggelenkt wird. Bei zu starker Krümmung des vorher ausgelegten Kabels 8 besteht die Gefahr, daß das Kabel von dem Einbettungsfahrzeug überfahren wird. Es ist deshalb zweckmäßig, die Fahrgeschwindigkeit des Einbettungsfahrzeuges 16 von der Krümmung des vor dem Einbettungsfahrzeug ausgelegten Kabels abhängig zu machen, derart, daß bei Unterschreiten eines vorgegebenen Wertes des Kabel-Krümmungsradius die Fahrgeschwindigkeit auf Null vermindert und ein diesen Zustand anzeigendes Signal erzeugt wird. Es kann dann zum Beispiel in der bekannten Weise das vor dem Einbettungsfahrzeug liegende Kabel mit einem Kabelwagen seitlich der Kabeltrasse ausgefahren werden, so daß ein größerer Bogen entsteht, an welchem das Einbettungsfahrzeug entlangfahren kann. Entwurf und Ausführung einer derartigen Sicherheitseinrichtung sind dem Fachmann ohne weiteres möglich, so daß eine nähere Beschreibung hier entbehrlich ist.

An dem Einbettungsfahrzeug 16 ist ein auf verschiedene Spültiefen t unterhalb des Einbettungsfahrzeuges 16 einstellbares Spülschwert 48 gelagert. Bei dem dargestellten Ausführungsbeispiel ergibt sich die Veränderbarkeit der Spültiefe dadurch, daß das Spülschwert 48 um eine Querachse 50 des Einbettungsfahrzeuges schwenkbar gelagert ist. Das Spülschwert 48 hat wenigstens einen Kabelkanal 52 und ist mit Spüldüsen 54 besetzt. Die Spüldüsen werden über Zuleitungen 56, 58 aus einer nicht dargestellten Pumpe mit Spülflüssigkeit aus dem Gewässer 6 versorgt. Um die Einbettungsleistung zu erhöhen, sind an der Vorderseite des Spülschwerts 48 Aufreißzähne 60 vorgesehen. Der Kabelkanal 52 verläuft von einem in der Nähe der Querachse 50 liegenden Ende, das an dem Ende eines im Fahrzeugkörper angeordneten Fahrzeug-Kabelkanals 62 liegt, zum spitz zulaufenden freien Ende 64 des Spülschwerts 48.

Zum Heben und Senken des Spülschwerts 48 dient bei der dargestellten Ausführungsform ein Hydraulikzylinder 66, der aus einer Drucksteuereinrichtung 68 und einer dieser vorgeschalteten (nicht dargestellten) Steuerpumpe gespeist wird. Die Drucksteuereinrichtung 68 empfängt Steuersignale über das Leitungsbündel 34.

Um die Spülwirkung des Spülschwerts zu unterstützen, ist das Spülschwert mit einer Vibrationseinrichtung 70 gekoppelt, beispielsweise einfach dadurch, daß wenigstens ein Vibrator auf dem Spülschwert 48 aufgebaut ist. Damit die Vibrationen des Spülschwerts keine Beschädigungen an dem durch das Spülschwert laufenden Kabel hervorrufen können, ist es zweckmäßig, den Kabelkanal 52 in Schwingmetall zu lagern. Damit die Schwingungen des Spülschwerts 48 sich nicht störend auf andere Teile des Einbettungsfahrzeuges 16 auswirken können, ist es zweckmäßig, auch das Spülschwert 48 in schwingungsdämpfenden Befestigungsmitteln 71 zu lagern ; auch die mechanische Ankoppelung an andere Teile der Vorrichtung kann über schwingungsdämpfende Kupplungen erfolgen, die aber hier der Einfachheit halber nicht dargestellt sind.

Durch schwingungsdämpfende Maßnahmen können die Schwingungen des Spülschwerts nur in begrenztem Ausmaß von dem durchlaufenden Kabel 8 ferngehalten werden. Man kann also die Schwingungsleistung des Spülschwerts 48 nicht beliebig steigern. Aus diesem Grund wie auch aus anderen Gründen ist die Intensität des Spülvorganges begrenzt. Das dargestellte Einbettungsfahrzeug ist deshalb zusätzlich mit einer mechanisch wirkenden Boden-Auflockerungseinrichtung 72 versehen, die wenigstens ein Auflockerungswerkzeug aufweist und wahlweise in Wirksamkeit setzbar ist. Die Boden-Auflockerungseinrichtung 72 liegt noch im Spülbereich des Spülschwerts 48, und zwar in der Einbettungsrichtung 18 vor dem Spülschwert 48. Dadurch wird ein besonders intensives Zusammenwirken des Spülschwerts 48 mit der Boden-Auflockerungseinrichtung 72 ermöglicht, und in den meisten Fällen ist ein Hin- und Herfahren des Einbettungsfahrzeuges 16 nicht erforderlich.

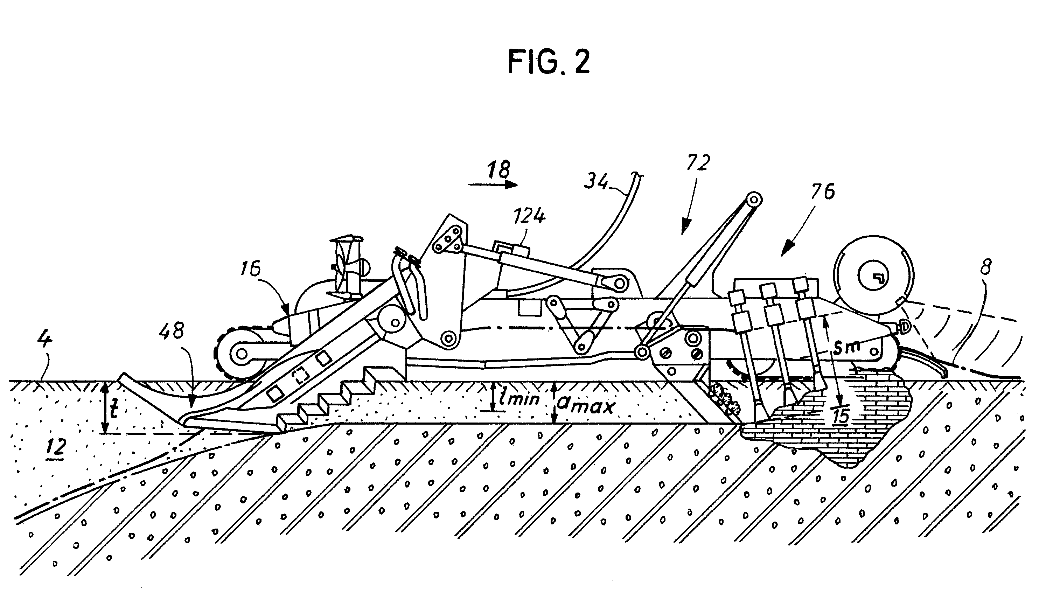

Bei der in Fig. 1 dargestellten Ausführungsform enthält die Boden-Auflockerungseinrichtung 72 mehrere Arten von Auflockerungswerkzeugen verschiedener Intensität, die wahlweise in Wirksamkeit setzbar sind. Man kann auf diese Weise in einem größeren Bereich verschiedener Bodenbeschaffenheiten eine optimale Auflockerungsgeschwindigkeit sicherstellen. Im einzelnen enthält das dargestellte Einbettungsfahrzeug ein Leichtwerkzeug 74, das zum Auflockern mäßig fester Bodenformationen, beispielsweise Geschiebemergel, geeignet ist, und mehrere Schwerwerkzeuge 76 zum Auflockern festerer Bodenformationen wie beispielsweise Kalkstein. Je nach Bedarf können auch andere Anzahlen von Leicht- und Schwerwerkzeugen vorgesehen werden. Das Leichtwerkzeug liegt, in der Einbettungsrichtung 18 gesehen, zwischen dem Spülschwert 48 und den Schwerwerkzeugen 76. Das ist zweckmäßig, weil dann beim Weiterbewegen des Einbettungsfahrzeuges 16 die Schwerwerkzeuge eine vorbereitende Auflockerungsarbeit für die nachfolgenden Leichtwerkzeuge und das Spülschwert ausführen können. Das Leichtwerkzeug 74 besteht bei der dargestellten Ausführungsform aus einem sogenannten Ripper, das ist im wesentlichen eine Aufreißschneide, die von einem starken Vibrator 78 in kräftige Schwingungen versetzt werden kann. Der Ripper hat in enger Nachbarschaft seiner Schneide 80 mehrere Hochdruck-Spüldüsen 82, die über einen Druckwasseranschluß 84 aus einer nicht dargestellten Pumpe mit Spülwasser gespeist werden können. Der Ripper stellt ein Beispiel dar für die allgemein vorhandene Möglichkeit, daß einer Anzahl von Auflockerungswerkzeugen wenigstens eine Werkzeug-Spüldüse zugeordnet ist, um die Auflockerungswirkung der Werkzeuge in einfacher Weise zu verbessern. Auch für die Auflockerungswerkzeuge gilt, daß sie, falls sie im Betrieb unerwünschte Schwingungen auf andere Teile des Einbettungsfahrzeuges 16 übertragen können, in schwingungsdämpfenden Befestigungsmitteln gelagert sein können. So ist der hier dargestellte Ripper in einem Schwingmetallager 86 um eine Leichtwerkzeug-Schwenkachse 88 drehbar am Fahrzeugkörper des Einbettungsfahrzeuges 16 gelagert. Er ist ferner mit einer steuerbaren Werkzeug-Stelleinrichtung 90 in Form eines Hydraulikzylinders gekoppelt, so daß er zwischen der in Fig. 1 dargestellten Ruhestellung, in welcher er nicht auf den Boden 4 des Gewässers einwirkt, und der in Fig. 2 dargestellten Wirkstellung, in welcher er auf den Gewässerboden einwirkt, verstellbar ist. Auf diese Weise kann der Ripper den Einbettungsvorgang nicht behindern, wenn er abgeschaltet ist und nur das Spülschwert 48 die Einbettungsarbeit übernimmt.

Die Schwerwerkzeuge 76 bestehen bei dem dargestellten Ausführungsbeispiel aus Meißeln, die von steuerbaren Werkzeug-Stelleinrichtungen 92 aus der in Fig. 1 dargestellten Ruhestellung in die in Fig. 2 dargestellte Wirkstellung verstellbar sind. Wiederum wird damit erreicht, daß die Schwerwerkzeuge 76 den Betrieb der Vorrichtung nicht stören können, wenn ein verhältnismäßig weicher Gewässerboden vorliegt und das Spülschwert 48 allein in Tätigkeit ist. Die Werkzeug-Stelleinrichtung enthält jeweils ein Antriebsfutter 94 und eine darin geführte und angetriebene Befestigungsstange 96, an deren freien Ende Werkzeugbefestigungsmittel 98 für die eigentlichen Werkzeuge, hier Meißel 100, vorgesehen sind. Die Werkzeugbestigungsmittel 98 sind zum Anbau und bequemen Austausch verschiedener Auflockerungswerkzeuge eingerichtet. In ähnlicher Weise ist auch die Werkzeugstelleinrichtung 90 für den Austausch verschiedener Werkzeuge eingerichtet. Bei dem dargestellten Ausführungsbeispiel ist der eigentliche Ripper mit lösbaren Befestigungsmitteln 102 an einer Grundplatte 104 befestigt. Die leichte Austauschbarkeit der Boden-Auflockerungswerkzeuge hat den Vorteil, daß man das Einbettungsfahrzeug 16 vor dem Einsatz mit denjenigen Auflockerungswerkzeugen bestücken kann, die für die Bodenstrukturen in dem Verlegegebiet am geeignetsten erscheinen.

Am vorderen und am hinteren Ende des Einbettungsfahrzeuges sind freiblasbare Trimmzellen 106 bzw. 108 vorgesehen, so daß die Gewichtsverteilung des Einbettungsfahrzeuges durch mehr oder weniger starkes Füllen oder Freiblasen der Trimmzellen in gewünschter Weise verändert werden kann. Die Trimmzellen können auch so ausgelegt sein, daß sie in völlig freigeblasenem Zustand das Eigengewicht des Einbettungsfahrzeuges größtenteils oder ganz aufheben, so daß das Einbettungsfahrzeug leicht an die Oberfläche des Gewässers geholt werden kann. Da die Gewichtssteuerung durch Trimmzellen an sich bekannt ist, ist eine nähere Beschreibung hier entbehrlich.

Um den Einbettungsvorgang an Ort und Stelle überwachen und noffalls durch manuellen Eingriff beeinflussen und korrigieren zu können, ist an dem Einbettungsfahrzeug 16 eine freiblasbare Beobachtungszelle angeordnet, in der ein Steuerstand für die Überwachung und manuelle Beeinflussung und/oder Steuerung der Einbettungsvorrichtung vorgesehen ist. In den meisten Fällen ist es zweckmäßig, die Beobachtungszelle, wie in Fig. 1 dargestellt, am vorderen Ende des Einbettungsfahrzeuges vorzusehen. Durch Sichtfenster 112, 114 können die vor bzw. an und hinter dem Einbettungsfahrzeug ablaufenden Vorgänge beobachtet werden.

In zahlreichen Fällen wird die Einbettungsarbeit keine besonderen Schwierigkeiten bieten, so daß eine Fernbeobachtung und Fernsteuerung genügt. Es ist deshalb zweckmäßig, daß ein zweiter Steuerstand 116 auf dem Begleitschiff 22 vorgesehen und mit dem Einbettungsfahrzeug 16 signalmäßig verbunden ist. Diese signalmäßige Verbindung wird über das Leitungsbündel 34 bewirkt. Zur Fernbeobachtung ist auf dem Einbettungsfahrzeug 16 eine drehbare Fernsehkamera 118 an einer möglichst hoch gelegenen Stelle installiert, bei dem dargestellten Ausführungsbeispiel im oberen Bereich der Beobachtungszelle 110. Die Beobachtungszelle 110 hat sowohl steuerbords als auch backbords des Einbettungsfahrzeuges 16 einen Schleuseneinstieg 120, so daß entsprechend der am Boden des Gewässers vorhandenen Strömungsrichtung der als Besatzung für die Beobachtungszelle 110 vorgesehene Taucher immer auf der Leeseite des Einbettungsfahrzeuges 16 in die Beobachtungszelle 110 einsteigen kann. Im allgemeinen genügt es, die Beobachtungszelle 110 für eine Besatzung von einem Mann auszulegen. Das Auswechseln der Besatzung kann über eine Taucherglocke erfolgen, die an dem Begleitschiff 22, welches sich ständig vor dem Einbettungsfahrzeug 16 befindet, angebracht ist. Diese Einrichtungen sind in den Figuren nicht dargestellt. Da die Beobachtungszelle 110 über das Leitungsbündel 34 mit allen notwendigen Betriebsmitteln und mit Energie aus dem Begleitschiff 22 versorgt werden kann, sind auch längere Aufenthalte der Besatzung in der Beobachtungszelle 110 möglich, so daß insbesondere es nicht erforderlich ist, einen Einbettungsvorgang nur wegen eines Besatzungswechsels zu unterbrechen.

Damit auch bei schlechten Sichtverhältnissen die Lage des vorher ausgelegten Kabels 8 anzeigemäßig erfaßt werden kann, ist im vorderen Bereich des Einbettungsfahrzeuges 16 ein elektronisches Kabelortungsgerät 122 vorgesehen.

Das Spülschwert 48 ist mit einer vorgegebenen Vorspannung nach unten beaufschlagbar und dementsprechend gegen diese Vorspannung nach oben drückbar, und die Arbeitsweise der Einbettungsvorrichtung ist in Abhängigkeit von der Spültiefe t (gleich der Ausfahrtiefe des Spülschwerts 48 unter dem Einbettungsfahrzeug 16) des unter der Vorspannung stehenden Spülschwerts 48 derart steuerbar, daß einer Verminderung der Spültiefe t unter einen vorgegebenen Mindestwert $t_{min}$ entgegengewirkt wird. Auf diese Weise wird, wie schon eingangs beschrieben wurde, eine automatische Anpassung der Einbettungstiefe an die jeweils vorliegende Festigkeit des Gewässerbodens erzielt, solange das Einspülen überhaupt noch vor sich gehen kann. Für diesen Zweck ist es besonders vorteilhaft, wenn die Schwert-Vorspannung mit zunehmender Schwert-Spültiefe zunimmt. Die Vorspannung für das Spülschwert 48 kann in beliebiger Weise erzeugt werden. Besonders einfach ist es, wenn die zum Heben und Senken des Spülschwerts 48 vorgesehene Stelleinrichtung 66 zur Erzeugung der Vorspannung ausgenutzt wird. Bei der dargestellten Ausführungsform wird der zu diesem Zweck vorgesehene Hydraulikzylinder aus der Drucksteuereinrichtung 68 derart gespeist, daß sich im Spülbetrieb die gewünschte Vorspannung und die gewünschte Abhängigkeit der Vorspannung von der Spültiefe t ergibt. Die Spültiefe t wird von einem Fühler 124 erfaßt, der bei der dargestellten Ausführungsform mit der Stange des Hydraulikzylinders zusammenwirkt. Es können auch andere Tiefenfühler verwendet werden. Ein die Spültiefe t wiedergebendes Tiefensignal wird in die Drucksteuereinrichtung 68 gegeben und dient dort zur Erzeugung der gewünschten Vorspannungscharakteristik für das Spülschwert 48, vorzugsweise derart, daß mit abnehmender Spültiefe t die Schwert-Vorspannung zunimmt, weil man dann die erwünschte Arbeitsweise sicherstellt, daß in festeren Böden, wo eine geringere Einbettungstiefe genügt, die Einspültiefe abnimmt ; das unter der Vorspannung stehende Spülschwert 48 simuliert dann gewissermaßen einen das eingebettete Kabel gefährdenden Störeinfluß, beispielsweise einen Schleppanker, der auch um so tiefer in den Boden eindringt, je weniger fest der Boden ist.

Es versteht sich, daß die Drucksteuereinrichtung 68 mit Hilfe der Steuerstände in der Beobachtungszelle 110 oder auf dem Begleitschiff 22 auch so geschaltet werden kann, daß mit ihr lediglich das Heben und Senken des Spülschwerts 48 bewirkt werden kann, wie es außerhalb des Spülvorganges oder in Sonderfällen, wenn ein Spülvorgang ganz von Hand gesteuert werden soll, erwünscht ist.

Die Erzeugung der Vorspannung des Spülschwerts mit Hilfe der ohnehin zum Heben und Senken des Spülschwerts vorgesehenen Stelleinrichtung 66 ist besonders einfach und ermöglicht eine große Vielfalt von Vorspannungs-Charakteristiken. Die insbesondere gewünschte Charakteristik, daß die Vorspannung mit abnehmender Spültiefe t zunimmt, läßt sich auch durch andere einfache bauliche Maßnahmen erzielen oder verstärken. Im einfachsten Fall kann man das Spülschwert über wenigstens eine Feder an dem Einbettungsfahrzeug abstützen Diese Möglichkeit ist in den Figuren nicht dargestellt. Es versteht sich, daß sich aufgrund der üblichen Federcharakteristik auch die gewünschte Abnahme der Vorspannung mit steigender Spültiefe ohne weiteres ergibt. Eine andere einfache Möglichkeit besteht darin, daß man bei einem Spülschwert, das wie bei der dargestellten Ausführungsform um eine Querachse 50 schwenkbar gelagert ist, die Gewichtsverteilung des Spülschwerts 48 bezüglich der Querachse 50 so auslegt, daß sich die gewünschte Abhängigkeit zwischen der Spültiefe t und der nach unten gerichteten Vorspannkraft ergibt. Bei der dargestellten Ausführungsform erkennt man ohne weiteres, daß der Schwerpunkt des Spülschwerts 48 links und unterhalb von der Querachse 50 liegt, so daß das freie Ende des Spülschwerts 48 um so mehr auf den darunterliegenden Boden drückt, je höher das Spülschwert angehoben wird.

Die für den automatischen oder manuellen Betrieb der Einspülvorrichtung erforderlichen Kenngrößen können durch bekannte Mittel erzeugt werden. So ist beispielsweise die am vorderen Ende des Einbettungsfahrzeuges 16 befindliche Öse 20 über eine Kraftmeßeinrichtung 126 an das Einbettungsfahrzeug 16 gekoppelt, so daß ein Zugkraftsignal gewonnen und zur Steuerung der Vorrichtung verwendet werden kann. Die Schwerwerkzeuge 76 haben Grenzschalter 128, die ein Signal abgeben, wenn die Schwerwerkzeuge auf ihre maximale Arbeitstiefe ausgefahren sind. Die bei Eigenantrieb von den Antriebsmotoren 28 und 30 verbrauchte Antriebsleistung wird ebenfalls gemessen, und aus dem Meßwert wird ein Zugkraftsignal abgeleitet, das etwa dem bei Schleppbetrieb über die Öse 20 von der Kraftmeßeinrichtung 126 abgegebenen Zugkraftsignal entspricht.

Die Verknüpfung und Verwendung der verschiedenen Signale wird in der folgenden Beschreibung der Arbeitsweise der Vorrichtung kurz dargelegt. Die für die Signalgewinnung und -verarbeitung erforderlichen Einrichtungen können herkömmlicher Art sein und werden deshalb hier nicht näher beschrieben.

Fig. 1 zeigt das Einbettungsfahrzeug 16 während des Spülbetriebs in weichem, leicht spülbarem Boden, beispielsweise Sand. Das unter Vorspannung stehende Spülschwert 48 hat sich auf eine Spültiefe t eingestellt, die nahe an dem Maximalwert $t_{max}$ liegt und jedenfalls beträchtlich größer ist als der Mindestwert $t_{min}$, bei dessen Unterschreiten die zusätzliche Boden-Auflockerungseinrichtung 72 in Wirksamkeit gesetzt wird. Der Fühler 124 gibt also ein Tiefesignal ab, das die Boden-Auflockerungseinrichtung 72 in der dargestellten Ruhestellung hält. Dieser Zustand bleibt unverändert, solange die Spültiefe größer bleibt als $t_{min}$. In diesem Bereich reinen Spülbetriebs kann es zu Vergleichmäßigung des Einbettungsergebnisses zweckmäßig sein, die Fahrgeschwindigkeit des Einbettungsfahrzeuges 16 in Abhängigkeit von der Spültiefe t derart zu steuern, daß bei kleiner werdender Spültiefe t die Fahrzeuggeschwindigkeit vermindert wird. Auf diese Weise kann man außerdem erreichen, daß der reine Spülbetrieb auch in noch verhältnismäßig festen Böden fortgesetzt wird, weil das Spülen dann langsamer und somit wirkungsvoller vor sich geht. Die zur Steuerung der Fahrgeschwindigkeit in Abhängigkeit von der Spültiefe erforderlichen Einrichtungen können vom Fachmann ohne weiteres geschaffen werden ; eine nähere Beschreibung dafür ist entbehrlich. Vielfach wird aber auch eine einfachere Arbeitsweise ausreichen, bei der in dem Bereich von Spültiefen t, die größer sind als der Mindestwert $t_{min}$, die Arbeitsweise der Einbettungsvorrichtung unabhängig von der Spültiefe t steuerbar ist.

Es versteht sich, daß die Vorspannungs-Beaufschlagung und die Tiefensteuerung des Spülschwerts 48 ebenso wie die Ingangsetzung der Boden-Auflockerungseinrichtung 72 manuell von dem Steuerstand in der Beobachtungszelle 110 oder dem Steuerstand 116 auf dem Begleitschiff 22 aus gesteuert werden können. Bevorzugt wird jedoch eine weitgehend automatisierte Arbeitsweise, weil dadurch Bedienungsfehler, die zu Beschädigungen der Einbettungsvorrichtung und/ oder des Kabels führen könnten, weitgehend ausgeschlossen werden können.

Für die automatische Arbeitsweise ist zunächst kennzeichnend, daß die Boden-Auflockerungseinrichtung 72 bei Unterschreiten des Mindestwerts $t_{min}$ der Spültiefe t selbsttätig in Wirksamkeit setzbar ist. Bei der dargestellten Ausführungsform, bei der mehrere Arten von Auflockerungswerkzeugen in der Boden-Auflockerungseinrichtung 72 vorgesehen sind, wird zunächst das leichteste und/oder die höchste Arbeitsgeschwindigkeit habende Auflockerungswerkzeug in Wirksamkeit gesetzt, das ist hier das Leichtwerkzeug 74 (der Ripper). Die Ingangsetzung der Boden-Auflockerungseinrichtung 72 wird veranlaßt, sobald der Fühler 124 das Signal der Mindesttiefe $t_{min}$ an eine nicht dargestellte Signalverarbeitungsschaltung liefert, die dann bewirkt, daß das Leichtwerkzeug 74 von seiner Werkzeug-Stelleinrichtung 90 in die in Fig. 2 dargestellte Wirkstellung geschwenkt und in Betrieb gesetzt wird. Bei der dargestellten Ausführungsform wird dazu der Vibrator 78 eingeschaltet, der vorzugsweise in seiner Vibrationsleistung veränderbar ist. Gleichzeitig werden auch die Hochdruck-Spüldüsen 82 des Rippers in Betrieb gesetzt.

Die Boden-Auflockerungseinrichtung 72 hat eine maximale Arbeitstiefe $a_{max}$ (Fig. 2), die größer ist als der Mindestwert $t_{min}$ der Spültiefe t, aber kleiner als der in weichem Boden erzielbare Höchstwert $t_{max}$ der Schwert-Spültiefe. Bei der dargestellten Ausführungsform hat das Leichtwerkzeug 74 die feste maximale Arbeitstiefe $a_{max}$. Zunächst arbeitet die Vorrichtung dann so, als sei die Boden-Auflockerungseinrichtung 72 nur mit dem Leichtwerkzeug 74 bestückt. Solange die Auflockerungswirkung des Leichtwerkzeuges 74 ausreicht, wird das von der Kraftmeßeinrichtung 126 gelieferte oder aus der Antriebsleistung der Hydraulikmotoren 28, 30 abgeleitete Zugkraftsignal f unterhalb eines vorgegebenen Schaltwerts $f_s$ bleiben. Das Leichtwerkzeug 74 stellt dann eine mit aufgelockertem Material angefüllte Furche her, die von dem nachfolgenden Spülschwert 48 leicht durchfahren und weiter vergrößert werden kann. Wenn dabei die Spültiefe t, also die Ausfahrtiefe des Spülschwerts 48, um einen bestimmten Betrag größer wird als die Arbeitstiefe der Boden-Auflockerungseinrichtung 72, also hier der Arbeitstiefe $a_{max}$ des zunächst allein in Betrieb befindlichen Leichtwerkzeugs 74, liefert der Fühler 124 oder eine damit in Verbindung stehende Signalerzeugungseinrichtung (nicht dargestellt) ein Ausschaltsignal für die Boden-Auflockerungseinrichtung 72, weil die größer werdende Spültiefe t anzeigt, daß das Einbettungsfahrzeug sich wieder über leichten Bodenformationen befindet. Um jedoch ein zu häufiges Ein- und Ausschalten der Boden-Auflockerungseinrichtung 72 zu vermeiden, ist eine (nicht dargestellte) Verzögerungseinrichtung vorgesehen, die das Ausschaltsignal erst nach einer vorgegebenen Zeitspanne zum Ausschalten der Boden-Auflockerungseinrichtung 72 wirksam werden läßt.

Wenn während des Betriebes des Leichtwerkzeugs 74 die zum Weiterbewegen des Einbettungsfahrzeuges 16 erforderliche Zugkraft F einen vorgegebenen Schaltwert $F_s$ überschreitet, wird automatisch das Schwerwerkzeug 76 in Wirksamkeit gesetzt. Dadurch wird der Bereich der automatisierten Arbeitsweise der Einbettungsvorrichtung auf harte und besonders schwer aufzulockernde Bodenformationen 15 ausgedehnt. Bei Auftreten dieses Schwerwerkzeug-Einschaltsignals werden die Schwerwerkzeuge in die in Fig. 2 dargestellte Wirkstellung gebracht. Bei der dargestellten Ausführungsform erfolgt dies durch die Stellvorrichtungen (Antriebsfutter 94), die die Schwerwerkzeuge während des Betriebs unter eine nach unten gerichtete Vorspannkraft setzen. Die Schwerwerkzeuge 76 werden in Betrieb gesetzt. Sie können insbesondere Felsbrocken, Mauerwerk und andere härtere Bodenformationen zerkleinern und für die nachfolgende weitere Zerkleinerung und das Wegspülen durch die Leichtwerkzeuge bzw. das Spülschwert 48 geeignet machen. Da die Schwerwerkzeuge jedoch einen erheblichen Energieverbrauch haben und sich verhältnismäßig schnell abnutzen, wird ihre Betriebszeit auf das unbedingt erforderliche Ausmaß beschränkt. Das wird dadurch erreicht, daß ein Ausschaltsignal für das Schwerwerkzeug erzeugt wird, sobald das Schwerwerkzeug 76 seine maximale Ausfahrtiefe $s_m$ erreicht und dadurch anzeigt, daß bei der angewandten Vorspannung der Gewässerboden offenbar wieder weich genug ist, um von den nachfolgenden Leichtwerkzeugen oder gar dem Spülschwert 48 allein aufgelockert und weggeschafft werden zu können. Um jedoch ein zu häufiges Ein- und Ausschalten der Schwerwerkzeuge 76 zu verhindern, wird vorzugsweise das Ausschaltsignal über eine Verzögerungseinrichtung (nicht dargestellt) wirksam gemacht, die das Ausschaltsignal erst nach einer vorgegebenen zeitlichen Verzögerung zum Ausschalten des Schwerwerkzeugs 76 wirksam werden läßt.

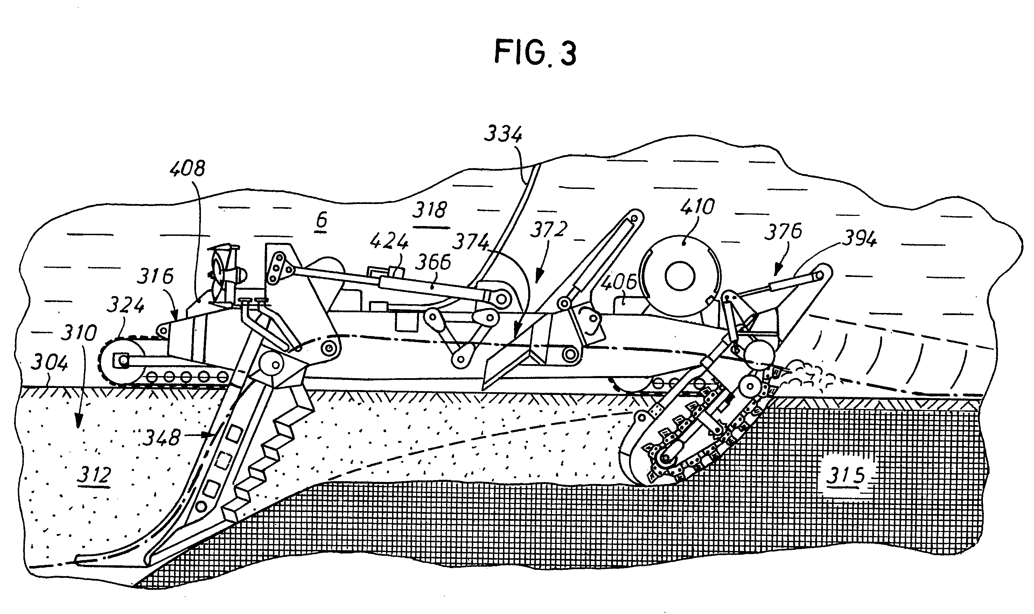

Fig. 3 erläutert ein Einbettungsfahrzeug 316, das ein Schwerwerkzeug 376 in Form einer Kettenfräse aufweist. Die Arbeitsweise ist die gleiche wie bei der Vorrichtung nach Figuren 1 und 2. Es kann deshalb die dafür zugehörige vorstehende Beschreibung verwendet werden, und es sind in Fig. 3 die gleichen Bezugszeichen wie in den Figuren 1 und 2 verwendet, jedoch um 300 erhöht.

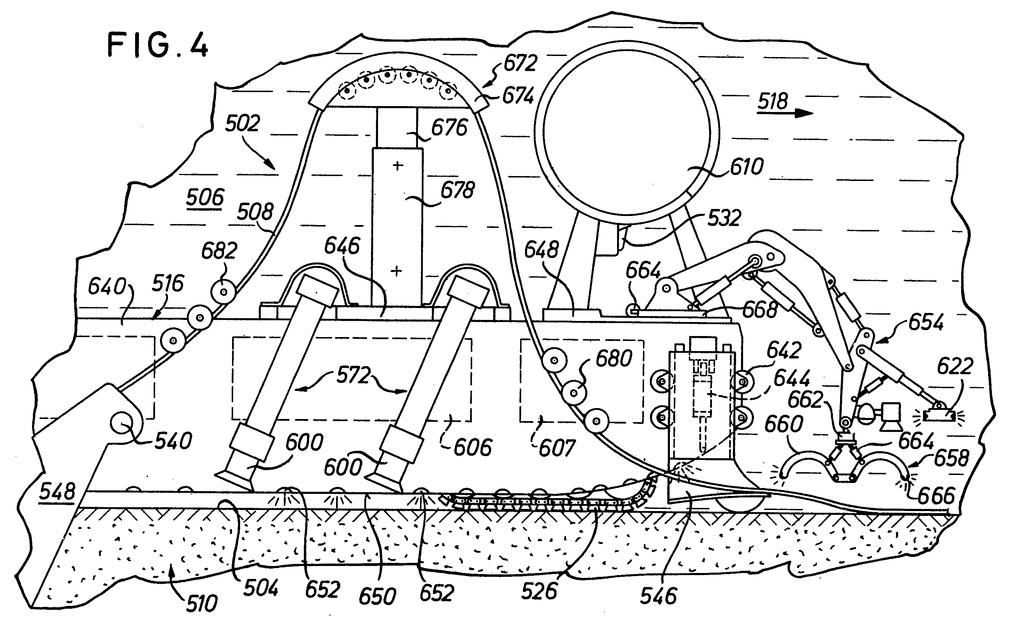

Fig. 4 zeigt schematisch einen vorderen Endabschnitt einer anderen Ausführungsform, für die die gleichen Bezugszeichen wie in den Figuren 1 und 2, jedoch unter Erhöhung um 500, verwendet werden. Es gilt deshalb insoweit auch die Beschreibung zu den Figuren 1 und 2.

Das Einbettungsfahrzeug 516 nach Fig. 4 enthält zwei in der Vorwärts-Fahrtrichtung 518 mit seitlichem Abstand nebeneinanderliegende Pontonkörper, von denen in Fig. 4 nur der eine Pontonkörper 640 zu sehen ist. Jeder Pontonkörper hat in einem seitlichen äußeren Randabschnitt ein Boden-Fahrwerk mit einem vorderen Raupenfahrwerk 526 und einem in Fig. 4 nicht erkennbaren hinteren Raupenfahrwerk. Zwischen den Pontonkörpern ist ein Spülschwert 548 um eine die Querachse 540 verkörpernde Querwelle, die sich zwischen den beiden Pontonkörpern erstreckt, drehbar gelagert. Ferner ist zwischen den Pontonkörpern ein Boden-Auflockerungswerkzeug 572 vorgesehen, das bei der dargestellten Ausführungsform mehrere nach unten ausfahrbare Meißel 600 aufweist. Am vorderen Ende des Einbettungsfahrzeuges 516 ist eine Kabel-Leiteinrichtung 546 angeordnet, die in einem Rollenlager 642 vertikal verschiebbar gelagert und mittels eines Hydraulikzylinders 644 der Höhe nach verstellbar ist.

Die beiden Pontonkörper sind durch die Lagereinrichtungen für das Spülschwert und die Auflockerungswerkzeuge sowie durch Brücken 646, 648 miteinander verbunden. Auf der Brücke 646 ist eine Beobachtungszelle 610 angeordnet. Seitlich davon sind Strömungsantriebe in Form von Propellern 532 vorgesehen. In den Pontonkörpern sind freiblasbare Trimmzellen 606, 607 vorgesehen. Mit diesen können Gewicht und Trimmlage des Einbettungsfahrzeuges 516 verändert werden. Damit auch auf wenig tragfähigen Bodenformationen genügend Gewicht angewandt werden kann, ist es zweckmäßig, daß das Einbettungsfahrzeug 516 wenigstens eine verhältnismäßig große untere Gleitfläche hat. Bei der dargestellten Ausführungsform ist jeder der beiden Pontonkörper unten mit einer Gleitfläche 650 ausgebildet, die am vorderen Ende nach oben gekrümmt ausläuft. Um das Gleiten unterstützen zu können, sind in den Gleitflächen 650 mehrere Wasser-Austrittsstellen 652 vorgesehen, durch die wahlweise Spülwasser abgegeben werden kann. Da das Gleiten normalerweise nur auf weichen Böden erforderlich sein wird, bei denen für den Einbettungsvorgang nur wenig Spülwasser benötigt wird, braucht zur Speisung der Wasser-Austrittsstellen 652 die Kapazität der (in Fig. 4 nicht dargestellten) Spülwasserpumpe nicht erhöht zu werden.

Die Gestaltung der Gleitflächen 650 wird sich nach den meist vorkommenden Bodenformationen richten. Es ist auch ohne weiteres möglich, die Gleitflächen mit schmaleren Gleitkufen auszubilden oder derartige Gleitkufen auswechselbar vorzusehen, damit auch in verhältnismäßig festen Bodenformationen eine gleitende Vorwärtsbewegung möglich ist. Für Anwendungsfälle, bei denen häufig mit Gleiten gearbeitet werden muß, können mit Vorteil Auflockerungswerkzeuge verwendet werden, die auch eine antreibende Wirkung haben, so beispielsweise Kettenfräsen nach Art des Schwerwerkzeuges 376 gemäß Fig. 3.

Andererseits kann es zweckmäßig sein, die Boden-Fahrwerke, insbesondere wenn sie als Raupen-Fahrwerke ausgebildet sind, mit einem Freilaufgang auszurüsten, damit bei Gleitbetrieb die Boden-Fahrwerke auf Freilauf schaltbar sind und dann beim Gleiten leicht von der Bodenfläche 504 antreibend mitgenommen werden können, so daß sie das Gleiten nicht behindern.

Das einzuspülende Kabel 508 ist oft unregelmäßig auf dem Gewässerboden 504 abgelegt und verläuft dort in Buchten oder sogar in Schleifen. Dadurch kann die Gefahr entstehen, daß das Einbettungsfahrzeug 516 Abschnitte des ausgelegten Kabels 508 überfährt und daß dabei die mechanischen Auflockerungswerkzeuge 572 das Kabel beschädigen oder zerstören. Außerdem kann das ausgelegte Kabel 508 stellenweise mehr oder weniger von Schwimmsand oder dergleichen bedeckt sein. Diese Unregelmäßigkeiten im Verlauf und in der Bedeckung des ausgelegten, noch einzuspülenden Kabels 508 wirken störend auf den Einspülvorgang zurück. Besonders gilt das für die bevorzugte Arbeitsweise, bei der das Spülschwert 548 mit einer vorgegebenen Vorspannkraft nach unten beaufschlagt ist und die Auflockerungswerkzeuge bei Unterschreiten einer bestimmten Spültiefe eingeschaltet werden. Die beschriebenen Unregelmäßigkeiten im Verlauf und Bedeckung des ausgelegten Kabels 508 können beim Einziehen in das Spülschwert 548 beträchtliche Schwankungen der mechanischen Kabel-Zugspannung und damit entsprechende Schwankungen der auf das Spülschwert einwirkenden Vorspannung hervorrufen und dadurch die beschriebene bevorzugte Arbeitsweise störend beeinträchtigen. Um derartige Probleme zu vermeiden und das Kabel vor Beschädigung durch die Auflockerungswerkzeuge zu schützen, sind bei der Ausführungsform nach Fig. 4 Kabel-Zuführeinrichtungen vorgesehen, die die Kabellose und die Kabel-Zugspannung vergleichmäßigen.

Die Kabel-Zuführeinrichtungen enthalten bei der dargestellten Ausführungsform zunächst eine vor dem vorderen Ende des Einbettungsfahrzeuges 516 wirksame Kabelortungseinrichtung 622. Dadurch können etwaige Fremdkörper und der Verlauf des ausgelegten Kabels frühzeitig erkannt werden, und/oder es können einfachere Sensoren mit geringer Fernwirkung verwendet werden ; das gilt insbesondere dann, wenn die Kabelortungseinrichtung 622 eine Fernsehkamera enthält. Die Kabelortungseinrichtung 622 ist fernsteuerbar beweglich. Zu diesem Zweck ist sie bei der dargestellten Ausführungsform an einer Auslegereinrichtung 654 angeordnet, die hydraulisch allseitig beweglich ist. Um erforderlichenfalls die Kabelortungseinrichtung 622 bis dicht an das ausgelegte Kabel 508 heranführen zu können und um das Kabel von Schwemmsand und dergleichen befreien zu können, ist die Kabelortungseinrichtung 622 mit einer Freispüleinrichtung versehen, die im einfachsten Fall aus Spüldüsen besteht.

Die Kabel-Zuführeinrichtungen enthalten ferner eine am vorderen Ende des Einbettungsfahrzeuges 516 angeordnete fernsteuerbare Kabel-Handhabungseinrichtung 658. Damit kann das ausgelegte Kabel 508 schon vor dem Einbettungsfahrzeug 516 angehoben, erfaßt und bewegt werden. Auf diese Weise kann beispielsweise das Kabel beim Auftreten von zu engen Krümmungen oder gar Schleifen seitwärts in einen schwächer gekrümmten glatteren Verlauf gerückt werden. Auch kann damit das Kabel aus Ablagerungen herausgehoben werden, usw. Bei der dargestellten Ausführungsform ist die Kabel-Handhabungseinrichtung 658 an derselben Auslegereinrichtung 654 angeordnet, die auch die Kabelortungseinrichtung 622 trägt ; es können aber natürlich auch getrennte Auslegereinrichtungen vorgesehen sein.

Die in Fig. 4 dargestellte Kabel-Handhabungseinrichtung 658 hat einen um das Kabel 508 herum schließbaren fernsteuerbaren Kabelgreifer 660, der in einem Drehlager 662 hydraulisch verdrehbar und durch Hydraulikzylinder 664 auf- und zuklappbar ist. Ferner sind an dem Kabelgreifer 660 Spüldüsen 666 vorgesehen, um erforderlichenfalls lockere Sinkstoff-Schichten, die sich auf dem abgelegten Kabel abgesetzt haben, wegspülen zu können, damit der Kabelgreifer ungehinderten Zugang zum Kabel hat. Mit dem Kabelgreifer kann man auch das ausgelegte Kabel begradigen.

Bei der in Fig. 4 dargestellten Ausführungsform ist die Auslegereinrichtung 654 in einem Drehlager 668 auf der Brücke 648 drehbar gelagert und kann mittels eines Hydraulikzylinders 664 gedreht werden. Vielfach wird aber eine solche Drehbarkeit der Auslegereinrichtung 654 nicht erforderlich sein.

Die Kabel-Zuführeinrichtungen enthalten ferner eine auf dem Einbettungsfahrzeug 516 angeordnete Kabellose-Ausgleichseinrichtung 672, die dafür sorgt, daß das Kabel im wesentlichen mit einer vorgegebenen konstanten mechanischen Zugspannung in das Spülschwert 548 eintritt, so daß die beschriebene bevorzugte Arbeitsweise mit vorgespanntem freibeweglichem Spülschwert nicht durch Schwankungen der Kabel-Zugspannung gestört wird.

Die Kabellose-Ausgleichseinrichtung 672 enthält eine Kabelbahn 674, über die das Kabel 508 in einer Schleife geführt ist ; die Schleife ist durch Wegbewegen der Kabelbahn ausziehbar. Bei der dargestellten Ausführungsform ist die Kabelbahn 674 bogenförmig ausgebildet und am Ende eines Stempels 676 angeordnet, der in einem Hydraulikzylinder 678 vertikal ausfahrbar ist. Vor und hinter der Kabelbahn sind zweckmäßigerweise Kabel-Leitrollen 680 bzw. 682 an Einbettungsfahrzeug drehbar gelagert ; über diese Leitrollen wird das Kabel 508 aus der Kabel-Leiteinrichtung 546 heraus bzw. in das Spülschwert 548 hinein geführt.

Im Betrieb wird der Hydraulikzylinder 678 mit einem im wesentlichen konstanten Druck beaufschlagt, so daß die Kabelbahn 674 eine im wesentlichen konstante Zugkraft auf das Kabel 508 ausübt und etwaige Schwankungen der Kabellose durch Aus- und Einfahren ausgleicht. Wenn der Stempel 676 seine maximale Ausfahrhöhe erreicht, kann das Einbettungsfahrzeug 516 seitwärts in eine gekrümmte Bahn gelenkt werden, um die zu große Kabellose wieder auf Werte zu vermindern, die innerhalb des Ausgleichsvermögens der Kabellose-Ausgleichseinrichtungen 672 liegen. Dieser Vorgang kann auch leicht automatisiert werden.

Die Kabelbahn 674 kann auch auf andere Weise vorgespannt sein, beispielsweise durch einen Auftriebskörper, eine Konstantzug-Winde oder dergleichen.

Die mechanische Kabel-Zugspannung kann zweckmäßigerweise durch wenigstens ein Meßgerät überwacht werden, das vorzugsweise zwischen der beweglichen Kabelbahn 674 und dem Spülschwert 548 und/oder innerhalb des Spülschwerts angeordnet ist.

Die Anordnung der Kabellose-Ausgleichseinrichtung 672 an dem Einbettungsfahrzeug 516 bietet den besonderen Vorteil, daß die freie Lenkbarkeit des Einbettungsfahrzeuges und damit die hohe Flexibilität der Arbeitsweise nicht beeinträchtigt wird.

Es versteht sich, daß die Ausführungsform nach Fig. 4 im übrigen auch mit allen Einrichtungen versehen sein kann, die im Zusammenhang mit den anderen Figuren beschrieben wurden.

Andere Ausführungsformen sind möglich, ohne den Rahmen der Erfindung zu verlassen. So können insbesondere die in den Figuren dargestellten Raupenfahrwerke, beispielsweise das Raupenfahrwerk 24, 26 der Figuren 1 und 2, auch durch Gleitkufen, Räder oder dergleichen ersetzt werden, es können andere Auflockerungswerkzeuge eingesetzt werden, usw.

**Ansprüche**

1. Verfahren zum Einbetten eines Kabels (8 ; 508) oder dergleichen in einen Gewässergrund (10 ; 310 ; 510), bei dem das Kabel (8 ; 508) in eine in dem Gewässergrund (10 ; 310 ; 510) fortschreitend durch Spülen hergestellte Zone verminderter Dichte eingeführt wird und beim Antreffen von Bodenformationen, die durch das Spülen nur unzureichend aufgelockert werden, der Gewässergrund (10 ; 310 ; 510) mechanisch aufgelockert wird, wobei das mechanische Auflockern in einem Bereich erfolgt, der in der Einbettungsrichtung (18 ; 318 ; 518) vor dem Zentrum des Spülbereichs liegt, dadurch gekennzeichnet, daß das mechanische Auflockern während der Durchführung des Einbettungsvorganges selbsttätig in Abhängigkeit von der erzielten Spültiefe (t) gesteuert wird, derart, daß das mechanische Auflockern eingeleitet wird, wenn die bei dem Spülen allein erzielte Spültiefe (t) einen vorbestimmten Mindestwert ($t_{min}$) unterschreitet, daß das mechanische Auflockern bis zu einer Arbeitstiefe erfolgt, die größer ist als der Mindestwert ($t_{min}$), aber kleiner ist als der Höchstwert ($t_{max}$) der bei weichem Boden maximal erreichbaren Spültiefe, und daß das mechanische Auflockern beendet wird, wenn die Spültiefe (t) eine vorbestimmte Zeitspanne lang die Arbeitstiefe des mechanischen Auflockerns überschritten hat.

2. Verfahren nach Anspruch 1, dadurch gekennzeichnet, daß zwei Intensitätsstufen des mechanischen Auflockerns wählbar sind, und daß die Stufe der höheren Intensität verwendet wird, wenn im Betrieb der Stufe der niedrigeren Intensität die für das Fortschreiten des Einbettungsvorganges aufzuwendende Zugkraft einen vorbestimmten Schaltwert überschreitet.

3. Verfahren nach Anspruch 2, dadurch gekennzeichnet, daß das Auflockern mit der höheren Intensitätsstufe mit einer von dem erzielten Auflockerungsgrad abhängigen Eindringtiefe erfolgt und beendet wird, wenn die Eindringtiefe eine vorbestimmte Zeitspanne lang einen vorbestimmten Schaltwert überschritten hat.

4. Vorrichtung zur Durchführung des Verfahrens nach einem der Ansprüche 1 bis 3 zum Einbetten von Kabeln und dergleichen in einen Gewässergrund, mit einem auf dem Gewässergrund bewegbaren, insbesondere fahrbaren, Einbettungsfahrzeug (16 ; 316 ; 516), das eine mit dem einzubettenden Kabel (8) in Führungsbeziehung stehende Leiteinrichtung (46 ; 546) und eine Spüleinrichtung aufweist, die auf verschiedene Spültiefen (t) unterhalb des Fahrzeugs einstellbar ist und vorzugsweise zu diesem Zweck um eine Querachse (50) des Einbettungsfahrzeuges (16 ; 316 ; 516) schwenkbar ist, wobei ferner das Einbettungsfahrzeug (16 ; 316 ; 516) zusätzlich mit einer mechanisch wirkenden Boden-Auflockerungseinrichtung (72 ; 372 ; 572) versehen ist, die ein Auflockerungswerkzeug (74 ; 374) aufweist und wahlweise in Wirksamkeit setzbar, vorzugsweise im Spülbereich der Spüleinrichtung, insbesondere in der Einbettungsrichtung (18 ; 318 ; 518) vor der Spüleinrichtung, angeordnet und vorzugsweise mit wenigstens einer Werkzeug-Spüldüse (82) versehen ist, dadurch gekennzeichnet, daß die Spüleinrichtung ein Spülschwert (48 ; 348 ; 548) aufweist, das mit einer vorgegebenen Vorspannung nach unten beaufschlagbar und gegen diese Vorspannung nach oben drückbar ist, und daß die Arbeitsweise der Einbettungsvorrichtung in Abhängigkeit von der Spültiefe (t) des unter der Vorspannung stehenden Spülschwerts (48 ; 348 ; 548) derart selbsttätig steuerbar ist, daß einer Verminderung der Schwert-Spültiefe (t) unter einen vorgegebenen Mindestwert ($t_{min}$) entgegengewirkt wird.

5. Vorrichtung nach Anspruch 4, dadurch gekennzeichnet, daß die Schwert-Vorspannung mit zunehmender Schwert-Spültiefe (t) zunimmt.

6. Vorrichtung nach Anspruch 5, bei der zum Heben und Senken des Spülschwerts (48 ; 348 ; 548) wenigstens ein Hydraulikzylinder (66 ; 366) vorgesehen ist, dadurch gekennzeichnet, daß zur Speisung des Hydraulikzylinders (66 ; 366) eine Drucksteuereinrichtung (68) vorgesehen ist, die im Einbettungsbetrieb eine gewünschte Abhängigkeit der Vorspannung von der Spültiefe (t) des Spülschwerts (48 ; 348 ; 548) einstellt.

7. Vorrichtung nach Anspruch 5, bei der das Spülschwert (48 ; 348 ; 548) um eine Querachse (50) des Einbettungsfahrzeugs (16 ; 316 ; 516) schwenkbar gelagert ist, dadurch gekennzeichnet, daß die Gewichtsverteilung des Spülschwerts (48 ; 348 ; 548) bezüglich der Querachse (50) zur Erzeugung der gewünschten Abhängigkeit zwischen der Schwert-Spültiefe (t) und der nach unten gerichteten Vorspannkraft ausgelegt ist.

8. Vorrichtung nach einem der Ansprüche 4 bis 7, dadurch gekennzeichnet, daß das Spülschwert (48 ; 348 ; 548) über wenigstens eine Feder an dem Einbettungsfahrzeug (16 ; 316 ; 516) abgestützt ist.

9. Vorrichtung nach einem der Ansprüche 4 bis 8, dadurch gekennzeichnet, daß bei Schwert-Spültiefen (t), die größer sind als der Mindestwert ($t_{min}$), die Arbeitsweise der Einbettungs-vorrichtung unabhängig von der Schwert-Spültiefe (t) steuerbar ist.

10. Vorrichtung nach einem der Ansprüche 4 bis 9, dadurch gekennzeichnet, daß die Boden-Auflockerungseinrichtung (72 ; 372 ; 572) bei Unterschreiten des Mindestwerts ($t_{min}$) der Schwert-Spültiefe (t) selbsttätig in Wirksamkeit setzbar ist.

11. Vorrichtung nach Anspruch 10, dadurch gekennzeichnet, daß die Boden-Auflockerungseinrichtung (72 ; 372 ; 572) eine maximale Arbeitstiefe ($a_{max}$) hat, die größer ist als der Mindestwert ($t_{min}$) der Schwert-Spültiefe (t), aber kleiner ist als der in weichem Boden erreichbare Höchstwert ($t_{max}$) der Schwert-Spültiefe (t), und daß eine Signalerzeugungseinrichtung (Fühler 124 ; 424) vorgesehen ist, die ein Ausschaltsignal für die zusätzliche Boden-Auflockerungseinrichtung (72 ; 372 ; 572) erzeugt, wenn die Schwert-Spültiefe (t) größer ist als die Arbeitstiefe der Auflockerungseinrichtung.

12. Vorrichtung nach Anspruch 11, gekennzeichnet durch eine Verzögerungseinrichtung, die das Ausschaltsignal erst nach einer vorgegebenen Zeitspanne das Ausschalten der Auflockerungseinrichtung (72 ; 372 ; 572) bewirken läßt.

13. Vorrichtung nach einem der Ansprüche 4 bis 12, dadurch gekennzeichnet, daß die Boden-Auflockerungseinrichtung (72 ; 372 ; 572) mehrere Arten von Auflockerungswerkzeugen (74 ; 374 ; 76 ; 376) verschiedener Intensität aufweist, die wahlweise in Wirksamkeit setzbar sind.

14. Vorrichtung nach Anspruch 13, dadurch gekennzeichnet, daß die zusätzliche Boden-Auflockerungseinrichtung (72 ; 372) wenigstens ein Leichtwerkzeug (74 ; 374) zur Auflockerung mäßig fester Bodenformationen, wie beispielsweise Geschiebemergel, und wenigstens ein Schwerwerkzeug (76 ; 376) zum Auflockern festerer Bodenformationen, wie beispielsweise Kalkstein, aufweist.

15. Vorrichtung nach Anspruch 14, dadurch gekennzeichnet, daß das Leichtwerkzeug (74 ; 374) in der Einbettungsrichtung (18 ; 318) gesehen, zwischen dem Spülschwert (48 ; 348) und dem Schwerwerkzeug (76 ; 376) angeordnet ist.

16. Vorrichtung nach einem der Ansprüche 13 bis 15, in Verbindung mit einem der Ansprüche 10 bis 12, dadurch gekennzeichnet, daß bei Unterschreiten des Mindestwerts ($t_{min}$) der Schwert-Spültiefe (t) zunächst das Leichtwerkzeug (74 ; 374) selbsttätig in Wirksamkeit setzbar ist.

17. Vorrichtung nach Anspruch 16, dadurch gekennzeichnet, daß bei Überschreiten eines vorgegebenen Schaltwerts ($F_s$) der Zugkraft (F) ein Einschaltsignal für das Schwerwerkzeug (76 ; 376) erzeugt und das Schwerwerkzeug (76 ; 376) in Wirksamkeit gesetzt wird.

18. Vorrichtung nach Anspruch 17, dadurch gekennzeichnet, daß bei Unterschreiten des Schaltwerts ($F_s$) der Zugkraft (F) ein Ausschaltsignal für das Schwerwerkzeug (76 ; 376) erzeugt wird.

19. Vorrichtung nach Anspruch 17 oder 18, dadurch gekennzeichnet, daß das Schwerwerkzeug (76 ; 376) unter eine nach unten gerichtete Vorspannkraft gesetzt ist und daß das Auschaltesignal für das Schwerwerkzeug (76 ; 376) bei Erreichen der maximalen Ausfahrtiefe ($s_{max}$) des Schwerwerkzeugs (76 ; 376) erzeugt wird.

20. Vorrichtung nach Anspruch 18 oder 19, dadurch gekennzeichnet, daß eine Verzögerungseinrichtung vorgesehen ist, die das Ausschaltsignal erst nach einer vorgegebenen zeitlichen Verzögerung zum Ausschalten des Schwerwerkzeugs (76 ; 376) wirksam werden läßt.

21. Vorrichtung nach einem der Ansprüche 4 bis 20, dadurch gekennzeichnet, daß Boden-Auflockerungswerkzeuge, die im Betrieb unerwünschte Schwingungen auf andere Teile des Einbettungsfahrzeuges und/oder auf das Kabel (8) übertragen könnten, in schwingungsdämpfenden Befestigungsmitteln (86) gelagert sind.

22. Vorrichtung nach einem der Ansprüche 4 bis 21, dadurch gekennzeichnet, daß die Boden-Auflockerungseinrichtung (72) Werkzeug-Befestigungsmittel (98, 102) aufweist, die zum Anbau und bequemen Austausch verschiedener Boden-Auflockerungswerkzeuge eingerichtet sind.

23. Vorrichtung nach einem der Ansprüche 4 bis 22, gekennzeichnet durch wenigstens eine steuerbare Werkzeug-Stelleinrichtung (90, 92) mit der wenigstens ein Boden-Auflockerungswerkzeug (74, 76) zwischen einer auf den Gewässerboden (4) einwirkenden Wirkstellung und einer unwirksamen Ruhestellung verstellbar ist.

24. Vorrichtung nach einem der Ansprüche 4 bis 23, dadurch gekennzeichnet, daß die Fahrgeschwindigkeit des Einbettungsfahrzeuges (16 ; 316 ; 516) in Abhängigkeit von der Schwert-Spültiefe (t) steuerbar ist, derart, daß bei kleiner werdender Schwert-Spültiefe (t) die Fahrzeuggeschwindigkeit vermindert wird.

25. Vorrichtung nach einem der Ansprüche 4 bis 24, dadurch gekennzeichnet, daß das Gewicht und die Gewichtsverteilung des Einbettungsfahrzeugs (16) durch freiblasbare Trimmzellen (106, 108) veränderbar sind.

26. Vorrichtung nach einem der Ansprüche 4 bis 25, dadurch gekennzeichnet, daß an dem Einbettungsfahrzeug (16 ; 316 ; 516) eine von wenigstens einem Bedienungsmann besetzbare Beobachtungszelle (110 ; 410 ; 610) vorgesehen ist, in der ein Steuerstand für die Überwachung und manuelle Beeinflussung und/oder Steuerung der Einbettungsvorrichtung (2) vorgesehen ist.

27. Vorrichtung nach Anspruch 26, dadurch gekennzeichnet, daß ein zweiter Steuerstand (116) auf einem dem Einbettungsfahrzeug (16) zugeordneten Belgeitschiff (22) vorgesehen und mit dem Einbettungsfahrzeug (16) signalmäßig verbunden ist.

28. Vorrichtung nach einem der Ansprüche 4 bis 27, dadurch gekennzeichnet, daß das Einbettungsfahrzeug (16) einen steuerbaren und richtungsumkehrbaren Eigenantrieb (28, 30) aufweist.

29. Vorrichtung nach Anspruch 28, dadurch gekennzeichnet, daß der Eigenantrieb sowohl ein Boden-Fahrwerk (24, 26) als auch einen Strömungsantrieb (32) aufweist.

30. Vorrichtung nach einem der Ansprüche 4 bis 29, dadurch gekennzeichnet, daß das Einbettungsfahrzeug (16) eine von der Kabel-Leiteinrichtung (46) gesteuerte Lenkeinrichtung aufweist.

31. Vorrichtung nach einem der Ansprüche 4 bis 30, dadurch gekennzeichnet, daß die Fahrgeschwindigkeit des Einbettungsfahrzeuges (16) in Abhängigkeit von der Krümmung des vor dem Einbettungsfahrzeug (16) ausgelegten Kabels (8) steuerbar ist, derart, daß beim Unterschreiten eines vorgegebenen Wertes des Kabel-Krümmungsradius die Fahrgeschwindigkeit auf Null vermindert und ein diesen Zustand anzeigendes Signal erzeugt wird.

32. Vorrichtung nach einem der Ansprüche 4 bis 31, gekennzeichnet durch Kabel-Zuführeinrichtungen (622, 658, 672) zum Vergleichmäßigen von Kabellose und Kabel-Zugspannung.

33. Vorrichtung nach Anspruch 32, dadurch gekennzeichnet, daß die Kabel-Zuführeinrichtungen (622, 658, 672) eine vor dem vorderen Ende des Einbettungsfahrzeuges (516) wirksame Kabel-Ortungseinrichtung (622) aufweisen.

34. Vorrichtung nach Anspruch 33, dadurch gekennzeichnet, daß die Kabelortungseinrichtung (622) fernsteuerbar beweglich ist.

35. Vorrichtung nach Anspruch 33 oder 34, dadurch gekennzeichnet, daß die Kabel-Ortungseinrichtung (622) an einer fernsteuerbaren Auslegereinrichtung (654) angeordnet ist.

36. Vorrichtung nach einem der Ansprüche 33 bis 35, dadurch gekennzeichnet, daß die Kabel- Ortungseinrichtung (622) eine Freispüleinrichtung aufweist.

37. Vorrichtung nach einem der Ansprüche 32 bis 36, dadurch gekennzeichnet, daß die Kabel-Zuführeinrichtung (622, 658, 672) eine am vorderen Ende des Einbettungsfahrzeuges (516) angeordnete fernsteuerbare Kabel-Handhabungseinrichtung (658) aufweist.

38. Vorrichtung nach Anspruch 37, dadurch gekennzeichnet, daß die Kabel-Handhabungseinrichtung (658) einen um das ausgelegte Kabel herum schließbaren fernsteuerbaren Kabelgreifer (660) aufweist.

39. Vorrichtung nach Anspruch 37 oder 38, dadurch gekennzeichnet, daß die Kabel-Handhabungseinrichtung (658) mit Spüldüsen (666) versehen ist.

40. Vorrichtung nach einem der Ansprüche 32 bis 39, dadurch gekennzeichnet, daß die Kabel-Zuführeinrichtungen (622, 658, 672) eine auf dem Einbettungsfahrzeug (516) angeordnete Kabellose-Ausgleichseinrichtung (672) aufweisen.

41. Vorrichtung nach Anspruch 40, dadurch gekennzeichnet, daß die Kabellose-Ausgleicheinrichtung (672) eine Kabelbahn (674) aufweist, über die das Kabel (508) in einer Schleife geführt ist, und daß die Kabelbahn (674) beweglich und dadurch die Schleife durch Wegbewegen der Kabelbahn (674) ausziehbar ist.

42. Vorrichtung nach einem der Ansprüche 4 bis 41, dadurch gekennzeichnet, daß das Einbettungsfahrzeug (516) wenigstens eine untere Gleitfläche (650) aufweist, mit der das Einbettungsfahrzeug (516) auf wenig tragfähigen Bodenformationen abgestützt werden kann.

43. Vorrichtung nach Anspruch 42, dadurch gekennzeichnet, daß in der Gleitfläche (650) wahlweise speisbare Wasseraustrittsstellen (652) angeordnet sind.

44. Vorrichtung nach Anspruch 42 oder 43, dadurch gekennzeichnet, daß das Einbettungsfahrzeug (516) zwei nebeneinanderliegende Pontonkörper (640) aufweist, die unten je eine Gleitfläche (650) aufweisen.

45. Vorrichtung nach einem der Ansprüche 42 bis 44 in Verbindung mit Anspruch 28 oder 29, mit einem Bodenantrieb, dadurch gekennzeichnet, daß der Bodenantrieb wahlweise in einen Freilaufbetrieb schaltbar ist.

46. Vorrichtung nach einem der Ansprüche 4 bis 45, dadurch gekennzeichnet, daß das Spülschwert (48) mit einer Vibrationseinrichtung (70) gekoppelt ist.

47. Vorrichtung nach einem der Ansprüche 4 bis 46, dadurch gekennzeichnet, daß das Spülschwert (48) an seiner Vorderseite mit Aufreißzähnen (60) versehen ist.

48. Vorrichtung nach einem der Ansprüche 4 bis 47, dadurch gekennzeichnet, daß das Spülschwert (48) mit Spüldüsen (54) besetzt ist, die mit Spülflüssigkeit speisbar sind.

## Claims

1. A process of embedding a cable (8 ; 508) or the like into the soil (10 ; 310 ; 510) under a body of water, wherein the cable (8,508) is introduced into a zone of reduced density which is progressively formed in the soil under the body of water by flushing, and wherein upon hitting against soil formations which have been insufficiently loosened by the flushing, the soil (10 ; 310 ; 510) is mechanically loosened, the mechanical loosening taking place in a zone disposed in advance of the center of the flushing zone in the direction of embedding (18 ; 318 ; 518), characterized in that the mechanical loosening is controlled automatically during the performance of the embedding operation in dependence upon the flushing depth (t) that has been reached in such a manner that the mechanical loosening is initiated when the flushing depth (t) obtained solely during the flushing operation falls below a predetermined minimum value $(t_{min})$ ; that the mechanical loosening is effected to a working depth greater than the minimum value $(t_{min})$ but lesser than the highest value $(t_{max})$ of the maximum flushing depth obtainable with soft soils, and in that the mechanical loosening is terminated when the flushing depth (t) has for a predetermined period of time exceeded the working depth of the mechanical loosening.

2. A process according to claim 1, characterized in that two stages of intensity may be selected for the mechanical loosening, and that the stage of the higher intensity is utilised when during the operation in the stage of lower intensity the pulling force to be applied for the progress of the embedding operation exceeds a predetermined switching value.

3. A process according to claim 2, characterized in that the loosening using the higher stage of intensity takes place with a depth of penetration dependent upon the degree of loosening obtained and is terminated when the depth of penetration has exceeded a predetermined switching value for a predetermined period of time.

4. An apparatus for performing the process according to any one of the claims 1 to 3, for embedding cables and the like into the soil under a body of water, comprising an embedding vehicle (16 ; 316 ; 516) which may be moved, in particular, driven on the soil under the body of water, said vehicle being provided with a guide means (46, 546) in guiding relationship with the cable (8) to be embedded, and a flushing means adapted to be adjusted to different flushing depths (t) beneath the vehicle said flushing means being preferably pivotable for this purpose about a transverse axis (50) of the embedding vehicle (16 ; 316 ; 516), the embedding vehicle (16 ; 316 ; 516) being furthermore additionally provided with a mechanically effective soil loosening means (72 ; 372 ; 572) equiped with a loosening tool (74 ; 374) and arranged while being capable of being selectively set in action preferably in the flushing zone of the flushing device, especially in advance of the flushing device in the direction of embedding (18 ; 318 ;

518), and preferably provided with at least one tool flushing nozzle (82), characterized in that the flushing means comprises a flushing coulter (48 ; 348 ; 548) adapted to be biased downwards with the aid of a predetermined biasing force and capable of being urged upwards against the said bias, and in that the mode of operation of the embedding device is automatically controllable in dependence upon the flushing depth (t) of the flushing coulter (48 ; 348 ; 548) subjected to the bias such that a reduction of the coulter flushing depth (t) below a predetermined minimum value ($t_{min}$) is counteracted.

5. An apparatus according to claim 4, characterized in that the coulter biasing force increases with the increasing coulter flushing depth.

6. An apparatus according to claim 5, wherein at least one hydraulic cylinder (66 ; 366) is provided for lifting and lowering the flushing coulter (48 ; 348 ; 548), characterized in that for feeding the hydraulic cylinder (66 ; 366) a pressure control means (68) is provided which adjusts a desired dependency of the biasing force on the flushing depth (t) of the flushing coulter (48 ; 348 ; 548) during the embedding operation.

7. An apparatus according to claim 5, wherein the flushing coulter (48 ; 348 ; 548) is pivotally supported about a transverse axis (50) of the embedding vehicle (16 ; 316 ; 516) characterized in that the distribution of the weight of the flushing coulter (48 ; 348 ; 548) with respect to the transverse axis (50) is designed to generate the desired relationship of dependency between the coulter flushing depth (t) and the downwardly directed biasing force.

8. An apparatus according to any one of the preceding claims 4 to 7, characterized in that the flushin coulter (48 ; 348 548) is supported via at least one spring at the embedding vehicle (16 ; 316 ; 516).

9. An apparatus according to any one of the claims 4 to 8, characterized in that with coulter flushing depths (t) greater than the minimum value ($t_{min}$) the mode of operation of the embedding apparatus is controllable independently of the coulter flushing depth (t).

10. An apparatus according to any one of the claims 4 to 9, characterized in that the soil loosening means (72 ; 372 ; 572) with the coulter flushing depth (t) falling below the minimum value ($t_{min}$) is capable of being automatically set in action.

11. An apparatus according to claim 10, characterized in that the soil loosening means (72 ; 372 ; 572) has a maximum working depth ($a_{max}$) which is greater than the minimum value ($t_{min}$) of the coulter flushing depth (t) but less than the maximum value ($t_{max}$) of the coulter flushing depth (t) obtainable in soft soil, and in that a signal producing means (sensor 124 ; 424) is provided which produces a switch-off signal for the additional soil loosening device (72 ; 372 ; 572) when the coulter flushing depth (t) is greater than the working depth of the loosening device.

12. An apparatus according to claim 11, characterized by a delaying means causing the switch-off signal to become effective to switch off the loosening device (72 ; 372 ; 572) only after a predetermined period of time.

13. An apparatus according to any one of the claims 4 to 12, characterized in that the soil loosening device (72 ; 372 ; 572) comprises several types of loosening tools (74 ; 374 ; 76 ; 376) of different intensities capable of being selectively set in action.

14. An apparatus according to claim 13, characterized in that the additional soil loosening device (72 ; 372) comprises at least one light weight tool (74 ; 374) for loosening moderately solid soil formations, such as for instance boulder clay, and at least one heavy tool (76 ; 376) for loosening more solid soil formations such as for instance limestone.

15. An apparatus according to claim 14, characterized in that the light weight tool (74 ; 374) is arranged between the flushing coulter (48 ; 348) and the heavy tool (76 ; 376) looking in the direction of embedding.

16. An apparatus according to any one of the claims 13 to 15, in connection with one of the claims 10 to 12, characterized in that with the coulter flushing depth (t) falling below the minimum value ($t_{min}$ 9) first the light weight tool (74 ; 374) is adapted to be automatically set in action.

17. An apparatus according to claim 16, characterized in that with a predetermined switching value ($F_s$) of the pulling force (F) exceeded a switch-on signal is generated for the heavy tool (76 ; 376) and the heavy tool (76 ; 376) is set in action.

18. An apparatus according to claim 17, characterized in that with the pulling force (F) falling below the switching value ($F_s$) a switch-off signal is generated for the heavy tool (76 ; 376).

19. An apparatus according to claim 17 or 18, characterized in that the heavy tool (76 ; 376) is subjected to a downwardly directed biasing force and the switch-off signal for the heavy tool (76 ; 376) is generated when the maximum depth of extension ($s_{max}$) of the heavy tool (76 ; 376) has been obtained.

20. An apparatus according claim 18 or 19, characterized in that a delaying means is provided which causes the switch-off signal to become effective to switch off the heavy tool (76 ; 376) only after a predetermined delay in time.

21. An apparatus according to any one of the claims 4 to 20 characterized in that soil loosening tools likely to transfer during operation undesired oscillations onto other components of the embedding vehicle and/or onto the cable (8) are supported in oscillation dampening fastening means (86).

22. An apparatus according to any one of the claims 4 to 21 characterized in that the soil loosening device (72) comprises tool fastening means (98, 102) arranged for attachment and easy replacement of different soil loosening tools.

23. An apparatus according to any one of the claims 4 to 22 characterized by at least one controllable tool adjusting means (90, 92) by means of which at least one soil loosening tool (74, 76) is adapted to be adjusted between a position of action effective on the soil (4) under the body of water and an ineffective position of rest.

24. An apparatus according to any one of the claims 4 to 23, characterized in that the driving speed of the embedding vehicle (16 ; 316 ; 516) is controllable in dependence upon the coulter flushing depth (t) such that with the coulter flushing depth (t) decreasing the vehicle speed is reduced.

25. An apparatus according to any one of the claims 4 to 24, characterized in that the weight and the distribution of the weight of the embedding vehicle (16) are variable by trimming cells (106, 108) capable of being blown free.

26. An apparatus according to any one of the claims 4 to 25, characterized in that an observation cell (110 ; 410 ; 610) capable of being manned by at least one operator is provided at the embedding vehicle (16 ; 316 ; 516) with a control stand provided therein for supervising and manually influencing and/or controlling the embedding apparatus (2).

27. An apparatus according to claim 26, characterized in that a second control stand (116) is provided on an accompanying boat (22) associated with the embedding vehicle (16) and is connected to the embedding vehicle (16) by signal communication.

28. An apparatus according to any one of the claims 4 to 27, characterized in that the embedding vehicle (16) comprises a controllable and directionally reversible individual drive (28, 30).

29. An apparatus according to claim 28, characterized in that the individual drive comprises both a ground engaging undercarriage (24, 26) and a fluid drive (32).

30. An apparatus according to any one of the claims 4 to 29, characterized in that the embedding vehicle (16) comprises a steering means controlled by the cable guide means (46).

31. An apparatus according to any one of the claims 4 to 30, characterized in that the driving speed of the embedding vehicle (16) is controllable in dependence upon the curvature of the cable (8) laid out in front of the embedding vehicle (16) such that with the curvature radius of the cable falling below a predetermined value the driving speed is reduced to zero and a signal is generated indicating this condition.

32. An apparatus according to any one of the claims 4 to 31, characterized by cable feeding means (622, 658, 672) for equalizing cable slack and cable tension.

33. An apparatus according to claim 32, characterized in that the cable feeding means (622, 658, 672) comprise a cable locating means (622) effective in front of the forward end of the embedding vehicle (516).

34. An apparatus according to claim 33, characterized in that the cable locating means (622) is movable under remote control.

35. An apparatus according to claim 33 or 34, characterized in that the cable locating means (622) is arranged at a remotely controllable cantilever arrangement (654).

36. An apparatus according to any one of the claims 33 to 35 characterized in that the cable locating means (622) comrpises a free-flushing means.

37. An apparatus according to any one of the claims 32 to 36, characterized in that the cable feeding means (622, 658, 678) comprises a remote-controlled cable handling arrangement (658) arranged at the forward end of the embedding vehicle (516).

38. An apparatus according to claim 37, characterized in that the cable handling means (658) comprises a remotecontrolled cable gripping means (660) capable of being closed about the laid-out cable.

39. An apparatus according to claim 37 or 38, characterized in that the cable handling means (658) is provided with flushing nozzles (666).

40. An apparatus according to any one of the claims 32 to 39, characterized in that the cable feeding means (622, 658, 672) comprise a cable slack balancing means (872) arranged on the embedding vehicle (516).

41. An apparatus according to claim 40, characterized in that the cable slack balancing means (672) comprises a cable track (674) over which the cable (508) is guided in a loop and in that the cable track (674) is movable and thereby the loop is extensible by moving away the cable track (674).

42. An apparatus according to any one of the claims 4 to 41, characterized in that the embedding vehicle (516) comprises at least one lower sliding surface (650) by means of which the embedding vehicle (516) may be supported on soil formations of poor load bearing capacity.

43. An apparatus according to claim 42, characterized in that the sliding surface (650) has selectively feedable water outlet points (652) arranged therein.

44. An apparatus according to claim 42 or 43, characterized in that the embedding vehicle (516) comprises two pontoon members (640) disposed side by side each having a sliding surface (650) below.

45. An apparatus according to any one of the claims 42 to 44 in connection with claim 28 or 29, comprising a ground drive, characterized in that the ground drive is adapted to be selectively switched to freewheeling operation.

46. An apparatus according to any one of the claims 4 to 45, characterized in that the flushing coulter (48) is coupled to a vibration means (70).

47. An apparatus according to any one of the claims 4 to 46, characterized in that the flushing coulter (48) is provided with tear-up teeth (60) at the front side thereof.

48. An apparatus according to any one of the claims 4 to 47, characterized in that the flushing coulter (48) is fitted with flushing nozzles (54) capable of being fed with flushing fluid.

## Revendications

1. Procédé pour noyer un câble (8 ; 508) ou un élément similaire dans le fond (10 ; 310 ; 540) d'une masse d'eau, suivant lequel le câble (8 ; 508) est introduit dans une zone de densité réduite, réalisée progressivement par lavage dans le fond (10 ; 310 ; 510) de la masse d'eau, et, en cas de rencontre de formations du sol insuffisamment ameublies par le lavage, le fond (10 ; 310 ; 510) de la masse d'eau, est ameubli mécaniquement, cet ameublissement mécanique ayant lieu dans une région qui, dans la direction de noyage (18 ; 318 ; 518), est située en avant du centre de la région de lavage, procédé caractérisé par le fait que l'ameublissement mécanique est commandé automatiquement, pendant l'exécution de l'opération de noyage, sous la dépendance de la profondeur de lavage (t) atteinte, de telle sorte que l'ameublissement mécanique soit amorcé lorsque la profondeur de lavage (t) atteinte par le lavage seul devient inférieure à un minimum prédéterminé ($t_{min}$), que l'ameublissement mécanique a lieu jusqu'à une profondeur de travail qui est supérieure au minimum ($t_{min}$), mais qui est inférieure au maximum ($t_{max}$) de la profondeur de lavage réalisable dans le cas d'un sol mou, et que l'ameublissement mécanique est terminé lorsque la profondeur de lavage (t) a dépassé, pendant une durée prédéterminée, la profondeur de travail de l'ameublissement mécanique.

2. Procédé selon la revendication 1, caractérisé par le fait que deux degrés d'intensité de l'ameublissement mécanique peuvent être choisis, et que le degré de plus grande intensité est utilisé lorsque, en utilisant le degré de moindre intensité, la force de traction à appliquer pour faire avancer l'opération de noyage dépasse une valeur de seuil déterminée.

3. Procédé selon la revendication 2, caractérisé par le fait que l'ameublissement au degré supérieur d'intensité a lieu avec une profondeur de pénétration dépendant du degré d'ameublissement obtenu, et prend fin quand la profondeur de pénétration a dépassé, pendant une durée déterminée, une valeur de seuil déterminée.

4. Appareil pour la mise en œuvre du procédé selon l'une quelconque des revendications 1 à 3, pour le noyage de câbles et d'éléments similaires dans le fond d'une masse d'eau, comportant un véhicule de noyage (16 ; 316 ; 516), qui peut se mouvoir, en particulier pouvant rouler sur le fond de la masse d'eau, et qui comporte un dispositif directeur (46 ; 546) en relation de guidage avec le câble (8) à noyer et un dispositif de lavage, réglable à différentes profondeurs de lavage (t) en dessous du véhicule, et pouvant de préférence pivoter, à cet effet, autour d'un axe transversal (50) du véhicule de noyage (16 ; 316 ; 516), ledit véhicule de noyage (16 ; 316 ; 516) étant muni en outre d'un dispositif d'ameublissement du sol (72 ; 372 ; 572), qui agit mécaniquement, qui comporte un outil d'ameublissement (74 ; 374), et qui peut être mis en activité à volonté, est de préférence disposé dans la zone de lavage du dispositif de lavage, en particulier en avant du dispositif de lavage, dans la direction de noyage (18 ; 318 ; 518), et est muni de préférence d'au moins une buse de lavage d'outil (82), appareil caractérisé par le fait que le dispositif de lavage présente un éperon de lavage (48 ; 348 ; 548) qui peut être sollicité vers le bas avec une tension prédéterminée, et qui peut être poussé vers le haut contre cette tension, et que le mode de fonctionnement du dispositif de noyage peut être commandé automatiquement sous la dépendance de la profondeur de lavage (t) de l'éperon de lavage (48 ; 348 ; 548), soumis à la tension de façon à s'opposer à une diminution de la profondeur de lavage (t) en dessous d'un minimum prédéterminé ($t_{min}$).

5. Appareil selon la revendication 4, caractérisé par le fait que la tension appliquée à l'éperon augmente à mesure que la profondeur de lavage (t) augmente.

6. Appareil selon la revendication 5, dans lequel au moins un vérin hydraulique (66 ; 366) est prévu pour lever et abaisser l'éperon de lavage (48 ; 348 ; 548), caractérisé par le fait que, pour l'alimentation du vérin hydraulique (66 ; 366), est prévu un dispositif de commande de la pression (68), qui, pendant le noyage, établit une dépendance déterminée entre la tension et la profondeur de lavage (t) de l'éperon de lavage (48 ; 348 ; 548) sur la précharge.

7. Appareil selon la revendication 5, dans lequel l'éperon de lavage (48 ; 348 ; 548) est monté de manière à pouvoir pivoter autour d'un axe transversal (50) du véhicule de noyage (16 ; 316 ; 516), caractérisé par le fait que la répartition du poids de l'éperon de lavage (48 ; 348 ; 548) relativement à l'axe transversal (50) est déterminée pour produire la dépendance désirée entre la profondeur de lavage (t) et la force de tension dirigée vers le bas.

8. Appareil selon l'une quelconque des revendications 4 à 7, caractérisé par le fait que l'éperon de lavage (48 ; 348 ; 548) est soutenu sur le véhicule de noyage (16 ; 316 ; 516) par l'intermédiaire d'au moins un ressort.

9. Appareil selon l'une quelconque des revendications 4 à 8, caractérisé par le fait que, dans le cas de profondeurs de lavage (t) qui sont supérieures au minimum ($t_{min}$), le mode de fonctionnement du dispositif de noyage peut être commandé indépendamment de la profondeur de lavage (t).

10. Appareil selon l'une quelconque des revendications 4 à 9, caractérisé par le fait que le dispositif d'ameublissement du sol (72 ; 372 ; 572) peut être mis automatiquement en activité quand la profondeur de lavage (t) devient inférieure au minimum ($t_{min}$).

11. Appareil selon la revendication 10, caractérisé par le fait que le dispositif d'ameublissement du sol (72 ; 372 ; 572) a une profondeur maximale

de travail ($a_{max}$) qui est supérieure au minimum ($t_{min}$) de la profondeur de lavage (t), mais qui est inférieure au maximum ($t_{max}$) de la profondeur de lavage (t), réalisable dans un sol mou, et qu'un dispositif générateur de signaux (capteur 124 ; 424) est prévu et engendre un signal de mise hors service du dispositif supplémentaire d'ameublissement du sol (72 ; 372 ; 572) quand la profondeur de lavage (t) est supérieure à la profondeur de travail du dispositif d'ameublissement.

12. Appareil selon la revendication 11, caractérisé par un dispositif de retard, qui ne permet au signal de mise hors service, de mettre le dispositif d'ameublissement (72 ; 372 ; 572) hors service qu'après une durée prescrite.

13. Appareil selon l'une quelconque des revendications 4 à 12, caractérisé par le fait que le dispositif d'ameublissement du sol (72 ; 372 ; 572) présente plusieurs sortes d'outils d'ameublissement (74 ; 374 ; 76 ; 376) d'intensité différente qui peuvent être mis en activité au choix.

14. Appareil selon la revendication 13, caractérisé par le fait que le dispositif supplémentaire d'ameublissement du sol (72 ; 372) comporte au moins un outil léger (74 ; 374) pour l'ameublissement de formation du sol, modérément fermes, comme par exemple de la marne à blocaux, et au moins un outil lourd (76 ; 376) pour l'ameublissement de formations du sol, plus fermes, comme par exemple du calcaire.

15. Appareil selon la revendication 14, caractérisé par le fait que l'outil léger (74 ; 374), vu dans la direction du noyage (18 ; 318), est disposé entre l'éperon de lavage (48 ; 348) et l'outil lourd (76 ; 376).

16. Appareil selon l'une quelconque des revendications 13 à 15, en combinaison avec l'une des revendications 10 à 12, caractérisé par le fait que lorsque la profondeur de lavage (t) devient inférieure au minimum ($t_{min}$), l'outil léger (74 ; 374) peut tout d'abord être mis automatiquement en activité.

17. Appareil selon la revendication 16, caractérisé par le fait que, lorsque la force de traction (F) dépasse une valeur de seuil prescrite ($F_s$), un signal de mise en action de l'outil lourd (76 ; 376) est produit et l'outil lourd (76 ; 376) est mis en activité.

18. Appareil selon la revendication 17, caractérisé par le fait que, lorsque la force de traction (F) devient inférieure à la valeur de seuil ($F_s$), un signal de mise hors d'activité de l'outil lourd (76 ; 376) est produit.

19. Appareil selon les revendications 17 et 18, caractérisé par le fait que l'outil lourd (76 ; 376) est soumis à une force de tension, dirigée vers le bas, et que le signal de mise hors d'activité de l'outil lourd (76 ; 376) est produit lorsque la profondeur maximale de déploiement ($s_{max}$) de l'outil lourd (76 ; 376) est atteinte.

20. Appareil selon les revendications 18 et 19, caractérisé par le fait qu'un dispositif de retard est prévu, dispositif qui ne permet au signal de mise hors d'activité d'agir qu'après un retard prescrit, pour mettre l'outil lourd (76 ; 376) hors d'activité.

21. Appareil selon l'une quelconque des revendications 4 à 20, caractérisé par le fait que des outils d'ameublissement du sol, qui, en service, pourraient transmettre des vibrations indésirables à d'autres parties du véhicule de noyage (16) et/ou au câble (8), sont montés dans des organes de fixation (86), amortissant les vibrations.

22. Appareil selon l'une quelconque des revendications 4 à 21, caractérisé par le fait que le dispositif d'ameublissement du sol (72) présente des moyens de fixation de l'outil (98, 102) qui sont agencés pour le montage et le remplacement commode des différents outils d'ameublissement du sol.

23. Appareil selon l'une quelconque des revendications 4 à 22, caractérisé par au moins un dispositif de manœuvre de l'outil (90, 92), qui peut être commandé, et avec lequel au moins un outil d'ameublissement du sol (74, 76) peut être déplacé entre une position active, où il agit sur le fond (4) des eaux, et une position inactive, de repos.

24. Appareil selon l'une quelconque des revendications 4 à 23, caractérisé par le fait que la vitesse de propulsion du véhicule de noyage (16 ; 316 ; 516) peut être commandée sous la dépendance de la profondeur de lavage (t), de telle sorte que, quand la profondeur de lavage (t) devient plus petite, la vitesse du véhicule est diminuée.

25. Appareil selon l'une quelconque des revendications 4 à 24, caractérisé par le fait que le poids et la répartition du poids du véhicule de noyage (16) peuvent être modifiés par des cellules d'assiette (106 ; 108), librement gonflables.

26. Appareil selon l'une quelconque des revendications 4 à 25, caractérisé par le fait que sur le véhicule de noyage (16 ; 316 ; 516) est prévue une cellule d'observation (110 ; 410 ; 610), qui peut être occupée par au moins un opérateur, et dans laquelle est prévu un poste de commande, servant à surveiller et à influencer manuellement et/ou à commander l'appareil de noyage (2).

27. Appareil selon la revendication 26, caractérisé par le fait qu'un deuxième poste de commande (116) est prévu sur un navire accompagnateur (22), associé au véhicule de noyage (16), et que ce deuxième poste de commande est relié par signaux au véhicule de noyage (16).

28. Appareil selon l'une quelconque des revendications 4 à 27, caractérisé par le fait que le véhicule de noyage (16) présente un dispositif d'entraînement propre (28, 30), qui peut être commandé, et dont le sens peut être inversé.

29. Appareil selon la revendication 28, caractérisé par le fait que le dispositif d'entraînement propre présente à la fois un dispositif de déplacement sur le sol (24, 26) et un dispositif d'entraînement hydrodynamique (32).

30. Appareil selon l'une quelconque des revendications 4 à 29, caractérisé par le fait que le véhicule de noyage (16) présente un dispositif de direction commandé par le dispositif directeur du câble (46).

31. Appareil selon l'une quelconque des revendications 4 à 30, caractérisé par le fait que la vitesse de déplacement du véhicule de noyage (16) peut être commandée sous la dépendance de la courbure du câble (8) déroulé devant le véhicule de noyage (16), de telle sorte que, lorsque le rayon de courbure du câble devient inférieur à une valeur prescrite, la vitesse de déplacement est réduite à zéro, et un signal indiquant cet état est produit.

32. Appareil selon l'une quelconque des revendications 4 à 31, caractérisé par des dispositifs d'amenée du câble (622, 658, 672), servant à uniformiser le mou du câble et la tension de traction du câble.

33. Appareil selon la revendication 32, caractérisé par le fait que les dispositifs d'amenée du câble (622, 658, 672) présentent un dispositif de repérage du câble (622), agissant en avant de l'extrémité antérieure du véhicule de noyage (516).

34. Appareil selon la revendication 33, caractérisé par le fait que le dispositif de repérage de câble (622) est mobile de façon télécommandable.

35. Appareil selon les revendications 33 et 34, caractérisé par le fait que le dispositif de repérage de câble (622) est placé sur un dispositif à flèche (654) télécommandable.

36. Appareil selon l'une quelconque des revendications 33 à 35, caractérisé par le fait que le dispositif de repérage de câble (622) présente un dispositif de dégagement par lavage.

37. Appareil selon l'une quelconque des revendications 32 à 36, caractérisé par le fait que le dispositif d'amenée du câble (622, 658) présente un dispositif télécommandable de manipulation du câble (658), disposé à l'extrémité antérieure du véhicule de noyage (516).

38. Appareil selon la revendication 37, caractérisé par le fait que le dispositif de manipulation du câble (658) présente un preneur de câble (660), qui est télécommandable et qui peut se refermer autour du câble déroulé.

39. Appareil selon les revendications 37 et 38, caractérisé par le fait que le dispositif de manipulation du câble (658) est muni de buses de lavage (666).

40. Appareil selon l'une quelconque des revendications 32 à 39, caractérisé par le fait que les dispositifs d'amenée du câble (622, 658, 672) présentent un dispositif de compensation (672) du mou du câble, disposé sur le véhicule de noyage (516).

41. Appareil selon la revendication 40, caractérisé par le fait que le dispositif de compensation (672) du mou du câble présente une voie pour le câble (675), par l'intermédiaire de laquelle le câble (508) est guidé en une boucle et que ladite voie pour le câble (674) est mobile, ce qui permet d'étirer la boucle en éloignant la voie pour le câble (674).

42. Appareil selon l'une quelconque des revendications 4 à 41, caractérisé par le fait que le véhicule de noyage (516) présente au moins une surface inférieure de glissement (650), par laquelle le véhicule de noyage (516) peut prendre appui sur des formations du sol, peu résistantes.

43. Appareil selon la revendication 42, caractérisé par le fait que, dans la surface de glissement (650), sont disposés des points de sortie d'eau (652), pouvant être alimentés au choix.

44. Appareil selon les revendications 42 et 43, caractérisé par le fait que le véhicule de noyage (516) présente deux corps de ponton (640), placés côte à côte, qui présente chacun, en bas, une surface de glissement (650).

45. Appareil selon l'une quelconque des revendications 42 à 44, en combinaison avec l'une des revendications 28 et 29, comportant un dispositif de déplacement sur le sol, caractérisé par le fait que le dispositif de déplacement sur le sol peut être commuté à volonté sur un fonctionnement en roue libre.

46. Appareil selon l'une quelconque des revendications 4 à 45, caractérisé par le fait que l'éperon de lavage (48) est couplé avec un dispositif à vibrations (70).

47. Appareil selon l'une quelconque des revendications 4 à 46, caractérisé par le fait que l'éperon de lavage (48) est muni, sur son côté antérieur, de dents défonceuses (60).

48. Appareil selon l'une quelconque des revendications 4 à 47, caractérisé par le fait que l'éperon de lavage (48) est garni de buses de lavage (54), qui peuvent être alimentées avec un liquide de lavage.

FIG. 1

0 019 909

# FIG. 2

FIG. 3

FIG. 4